# EUROPÄISCHE PATENTSCHRIFT

(11) **EP 3 038 866 B1**
(45) Veröffentlichungstag und Bekanntmachung des Hinweises auf die Patenterteilung: **04.10.2017**
(21) Anmeldenummer: 14753253.5
(22) Anmeldetag: 20.08.2014
(51) Int. Cl.: B60T 7/04, B60T 8/50, B60T 13/74

(54) **ELEKTROHYDRAULISCHE FAHRZEUG-BREMSANLAGE MIT ELEKTROMECHANISCHEM AKTUATOR UND VERFAHREN ZUM BETREIBEN DER BREMSANLAGE**
ELECTROHYDRAULIC VEHICLE BRAKE SYSTEM HAVING AN ELECTROMECHANICAL ACTUATOR AND METHOD FOR OPERATING THE BRAKE SYSTEM
SYSTÈME DE FREINAGE ÉLECTROHYDRAULIQUE DE VÉHICULE, MUNI D'UN ACTIONNEUR ÉLECTROMÉCANIQUE, ET PROCÉDÉ POUR FAIRE FONCTIONNER CE SYSTÈME DE FREINAGE

(30) Priorität: 26.08.2013 DE 102013014188
(43) Veröffentlichungstag der Anmeldung: 06.07.2016
(73) Patentinhaber: Lucas Automotive GmbH, 56070 Koblenz (DE)
(72) Erfinder: KNECHTGES, Carsten, 56727 Mayen (DE); KNECHTGES, Josef, 56727 Mayen (DE); PASSMANN, Andreas, 56206 Hilgert (DE)
(74) Vertreter: Röthinger, Rainer
(86) Internationale Anmeldenummer: PCT/EP2014/067718
(87) Internationale Veröffentlichungsnummer: WO 2015/028363

(56) Entgegenhaltungen:
- WO-A1-2012/097963
- DE-A1- 4 142 004
- DE-A1-102008 000 873
- DE-A1-102011 077 329

## Beschreibung

### Technisches Gebiet

Die vorliegende Offenbarung betrifft allgemein das Gebiet der Fahrzeug-Bremsanlagen. Konkret wird eine elektrohydraulische Fahrzeug-Bremsanlage mit einem elektromechanischen Aktuator zur Betätigung der Bremsanlage beschrieben.

### Hintergrund

Elektromechanische Aktuatoren finden bereits seit geraumer Zeit in Fahrzeug-Bremsanlagen Verwendung, beispielsweise zur Realisierung einer elektrischen Parkbremsfunktion (EPB). Bei elektromechanischen Bremsanlagen (EMB) ersetzen sie die herkömmlichen Hydraulikzylinder an den Radbremsen.

Aufgrund technischer Fortschritte hat sich die Leistungsfähigkeit der elektromechanischen Aktuatoren fortlaufend erhöht. Es wurde daher in Erwägung gezogen, derartige Aktuatoren auch zur Implementierung moderner Fahrdynamikregelsysteme heranzuziehen. Zu solchen Regelsystemen zählen ein Antiblockiersystem (ABS), eine Antriebsschlupfregelung (ASR) und ein elektronisches Stabilitätsprogramm (ESP), auch als Fahrzeugstabilitätsregelung (Vehicle Stability Control, VSC) bezeichnet.

Die WO 2006/111393 A lehrt eine elektrohydraulische Bremsanlage mit einem hochdynamischen elektromechanischen Aktuator, der die Druckmodulation im Fahrdynamikregelbetrieb übernimmt. Der in der WO 2006/111393 A beschriebene elektromechanische Aktuator ist dazu vorgesehen, direkt auf einen Hauptzylinder der Bremsanlage einzuwirken.

Aufgrund der hohen Dynamik des elektromechanischen Aktuators lassen sich die hydraulischen Komponenten der aus der WO 2006/111393 A bekannten Bremsanlage auf ein einziges 2/2-Wege-Ventil pro Radbremse reduzieren. Das einer bestimmten Radbremse zugeordnete Ventil wird zum Aufbau oder Abbau von Hydraulikdruck an der Radbremse geöffnet und bleibt während einer Druckhaltephase geschlossen.

Zur Realisierung radindividueller Druckmodulationen werden die Ventile einzeln oder gruppenweise im Zeitmultiplex-Betrieb angesteuert. Um im Zeitmultiplex-Betrieb eine sichere Fahrdynamikregelung durchführen zu können, wird im elektromechanischen Aktuator ein Elektromotor eingesetzt, der in wenigen Millisekunden seine Position in präziser Weise verändern kann. Trotzdem gibt es Situationen, in denen der Zeitmultiplex-Betrieb systembedingt an seine Grenzen stößt und daher keine optimale Fahrdynamikregelung mehr möglich ist. So kann es im Rahmen einer Schlupfregelung Situationen geben, in denen für zwei Radbremsen unterschiedliche Druckanforderungen bestehen und die aus dem Zeitmultiplex-Betrieb resultierende Verzugszeit für das Einstellen der unterschiedlichen Drücke mit Nachteilen für die Schlupfregelung verbunden ist.

Die Druckschrift WO 2012/097963 A1 lehrt eine Betätigungseinrichtung, insbesondere für eine Fahrzeugbremse, wobei aus einer Kolben-Zylinder-Einheit über eine erste hydraulische Verbindung und ein Magnetventil Hydraulikflüssigkeit einem Aktuator, insbesondere einer Radbremse, zugeführt wird. Erfindungsgemäß ist vorgesehen, dass eine weitere hydraulische Verbindung die Kolben-Zylinder-Einheit mit einem Hydraulikflüssigkeitsbehälter verbindet und dass in dieser Verbindung eine Magnetventil-anordnung angeordnet ist, die zumindest zwei Ventile aufweist, die in unterschiedlichen Strömungsrichtungen wirken.

### Kurzer Abriss

Es sind eine elektrohydraulische Kraftfahrzeug-Bremsanlage sowie ein Verfahren zum Betreiben einer solchen Bremsanlage anzugeben, die eine insbesondere aus Sicherheitsaspekten vorteilhafte Funktionalität aufweisen.

Gemäß einem Aspekt wird eine elektrohydraulische Fahrzeug-Bremsanlage angegeben, die einen elektromechanischen Aktuator zur Betätigung wenigstens eines Hydraulikkolbens, um an einer oder mehreren einer Mehrzahl von Radbremsen einen Hydraulikdruck einzustellen, einen Satz elektrisch ansteuerbarer Ventilanordnungen sowie ein Steuergerät oder ein Steuergerätesystem umfasst. Der Satz elektrisch ansteuerbarer Ventilanordnungen umfasst je eine erste Ventilanordnung zwischen einem den wenigstens einen Hydraulikkolben aufnehmenden Zylinder und jeder der Mehrzahl von Radbremsen sowie wenigstens eine zweite Ventilanordnung zwischen einer Aufnahme-Einrichtung für Hydraulikfluid und wenigstens einer der Radbremsen, wobei die wenigstens eine zweite Ventilanordnung parallel zu derjenigen der ersten Ventilanordnungen vorgesehen ist, die derselbe Radbremse wie die wenigstens eine zweite Ventilanordnung zugeordnet ist. Das Steuergerät oder Steuergerätesystem ist dazu ausgebildet, die ersten Ventilanordnungen und den elektromechanischen Aktuator anzusteuern, um an wenigstens einer der Radbremsen und über die dieser Radbremse zugeordnete, geöffnete erste Ventilanordnung einen Hydraulikdruck aufzubauen sowie über die geöffnete erste Ventilanordnung einen aufgebauten Hydraulikdruck abzubauen.

Das Steuergerät oder Steuergerätesystem kann dazu ausgebildet sein, um den an einer Radbremse aufgebauten Hydraulikdruck wahlweise durch Öffnen der zugeordneten ersten Ventilanordnung oder durch Öffnen der zugeordneten zweiten Ventilanordnung abzubauen. Demgemäß können erste Fahrdynamikregelszenarien definiert sein, bei denen ein Hydraulikdruckabbau an einer Radbremse über die geöffnete erste Ventilanordnung erfolgt, sowie zweite Fahrdynamikregelszenarien, in denen der Hydraulikdruckabbau über die geöffnete zweite Ventilanordnung geschieht.

Beispielsweise kann das Steuergerät oder das Steuergerätesystem dazu ausgebildet sein, um den Hydraulikdruck an der Radbremse über die geöffnete zweite Ventilanordnung abzubauen, wenn an wenigstens einer weiteren der Radbremsen über die dieser weiteren Radbremse zugeordnete, geöffnete Ventilanordnung mittels des elektromechanischen Aktuators ein Hydraulikdruckabbau mit unzureichender Geschwindigkeit oder ein Hydraulikdruckaufbau erfolgt. Eine solche Vorgehensweise kann insbesondere im Rahmen einer Schlupfregelung (z. B. bei einem ABS- oder ESP-Eingriff), wenn an den beiden Radbremsen unterschiedliche Druckanforderungen bestehen, implementiert sein.

Allgemein ermöglicht die wenigstens eine zweite Ventilanordnung einen simultanen Druckabbau und Druckaufbau an unterschiedlichen Radbremsen während eines Fahrdynamikregeleingriffs. So kann über die einer ersten Radbremse zugeordnete, geöffnete erste Ventilanordnung mittels des elektromechanischen Aktuators ein Hydraulikdruckaufbau erfolgen, während an einer zweiten Radbremse die zugeordnete zweite Ventilanordnung zum Druckabbau geöffnet wird. Ein solcher Hydraulikdruckabbau an einer oder mehreren Radbremsen über eine oder mehrere der zweiten Ventilanordnungen gleichzeitig mit einem Hydraulikdruckaufbau an einer oder mehreren anderen Radbremsen kann im Zusammenhang mit einer Ansteuerung der ersten Ventilanordnungen in einem Zeitmultiplex-Betrieb oder anderweitig erfolgen.

Allgemein kann das Steuergerät oder das Steuergerätesystem dazu ausgebildet sein, um die ersten (und ggf. auch die zweiten) Ventilanordnungen in einem Zeitmultiplex-Betrieb zu betätigen. Dabei kann jeder der Ventilanordnungen (und damit jeder Radbremse) wenigstens ein Zeitschlitz zugeordnet sein. Diese Zuordnung schließt nicht aus, dass einzelne Ventilanordnungen über mehrere Zeitschlitze hinweg geöffnet oder geschlossen gehalten werden. Das Steuergerät oder das Steuergerätesystem kann ferner dazu ausgebildet sein, um den Hydraulikdruck an einer Radbremse über die geöffnete zweite Ventilanordnung während eines Zeitschlitzes abzubauen, der einer anderen Radbremse (bzw. der dieser anderen Radbremse zugeordneten ersten Ventilanordnung) zugeordnet ist.

Die Zuordnung von Zeitschlitzen zu Ventilanordnungen kann beinhalten, dass eine Ventilanordnung ausschließlich während des dieser ersten Ventilanordnung zugeordneten Zeitschlitzes betätigt (z. B. geöffnet oder geschlossen) werden kann. Die Zuordnung zwischen Ventilanordnungen und Zeitschlitzen kann dabei statisch festgelegt sein (z.B. in einer seriellen Abfolge) oder prioritätsbasiert während eines laufenden Zeitmultiplex-Betriebs ermittelt werden. Auch eine Kombination dieser beiden Szenarien ist möglich, wonach eine vordefinierte Zuordnung prioritätsbasiert modifiziert wird.

Gemäß einer Variante sind die wenigstens eine zweite Ventilanordnung sowie diejenige der ersten Ventilanordnungen, die derselben Radbremse wie die zweite Ventilanordnung zugeordnet ist, seriell in einem Hydraulikpfad zwischen dem den wenigstens einen Hydraulikkolben aufnehmenden Zylinder und der Aufnahme-Einrichtung angeordnet. In einem solchen Fall kann das Steuergerät oder das Steuergerätesystem dazu ausgebildet sein, um die zweite Ventilanordnung und die derselben Radbremse zugeordnete erste Ventilanordnung zu öffnen, um den Zylinder fluidisch mit der Aufnahme-Einrichtung zu koppeln. Wird die erste Ventilanordnung dann für eine erste Zeitdauer geöffnet gehalten und die zweite Ventilanordnung für eine zweite Zeitdauer, bestimmt der zeitliche Überlapp dieser Zeitdauern eine dritte Zeitdauer, während welcher der Zylinder fluidisch mit der Aufnahme-Einrichtung gekoppelt ist.

Das Steuergerät oder das Steuergerätesystem kann dazu ausgebildet sein, um bei mit dem den wenigstens einen Hydraulikkolben aufnehmenden Zylinder fluidisch gekoppelter Aufnahme-Einrichtung den elektromechanischen Aktuator zu betätigen, um Hydraulikfluid aus dem Zylinder in die Aufnahme-Einrichtung abzulassen. Dieses Ablassen von Hydraulikfluid kann im Zusammenhang mit einer Leerweg-Freischaltung erfolgen, beispielsweise um zu verhindern, dass ein weiteres, sich auf den Zylinder zu bewegendes (z.B. mechanisches) Kraftübertragungselement auf den Zylinder einwirken kann. Die Leerweg-Freischaltung kann in unterschiedlichen Betriebszuständen erfolgen, beispielsweise im regenerativen Bremsbetrieb (Generatorbetrieb) oder im Fahrdynamikregelbetrieb.

Zusätzlich oder alternativ hierzu kann das Steuergerät oder Steuergerätesystem dazu ausgebildet sein, um bei mit dem Zylinder fluidisch gekoppelter Aufnahme-Einrichtung den elektromechanischen Aktuator zu betätigen, um Hydraulikfluid aus der Aufnahme-Einrichtung in den Zylinder anzusaugen. Ein solcher Ausgangvorgang kann zum Nachfüllen des Zylinders, beispielsweise während eines Fahrdynamikregeleingriffs erfolgen. Es sind jedoch auch andere Szenarien denkbar, in denen das Ansaugen stattfinden kann.

Die Bremsanlage kann wenigstens ein Rückschlagventil umfassen. Das Rückschlagventil kann in einem Hydraulikpfad zwischen dem den wenigstens einen Hydraulikkolben aufnehmenden Zylinder und der Aufnahme-Einrichtung vorgesehen sein, wobei eine Durchlassrichtung des Rückschlagventils zum Zylinder zeigt. Das Steuergerät oder Steuergerätesystem kann in diesem Fall dazu ausgebildet sein, um durch Betätigen des elektromechanischen Aktuators Hydraulikfluid aus der Aufnahme-Einrichtung über das Rückschlagventil in den Zylinder anzusaugen (z.B. zum Nachfüllen des Zylinders während eines Fahrdynamikregeleingriffs). Dabei kann das Rückschlagventil derart im Hydraulikpfad zwischen dem Zylinder und der Aufnahme-Einrichtung vorgesehen sein, dass das Ansaugen auch dann erfolgen kann, wenn eine, mehrere oder alle der ersten Ventileinrichtungen und/oder die wenigstens eine zweite Ventileinrichtung geschlossen ist.

Allgemein kann das Rückschlagventil einen Öffnungsquerschnitt von mehr als 10 mm² (z. B. ungefähr 12 bis 16 mm²) aufweisen. Alternativ oder zusätzlich hierzu kann das Rückschlagventil einen Gummidichtsitz besitzen.

Der Zylinder kann eine oder zwei Kammern umfassen. Wenn der Zylinder zwei Kammern umfasst, die jeweils mit der Aufnahme-Einrichtung verbunden sind, kann jeder Kammer ein separates Rückschlagventil zugeordnet sein.

Es ist an dieser Stelle darauf hinzuweisen, dass das hier vorgeschlagene, mindestens eine Rückschlagventil auch unabhängig von den weiteren, hier offenbarten technischen Lehren allgemein bei einer elektromechanischen Fahrzeug-Bremsanlage implementierbar ist. Insbesondere kann das mindestens eine Rückschlagventil auch bei Bremsanlagen mit herkömmlichen Ventil-Beschaltungen (z.B. mit einer herkömmlichen 12-Ventil-Beschaltung) und herkömmlichen Ventil-Ansteuerungen (z.B. ohne Multiplex-Ansteuerung) zum Einsatz gelangen.

Bei dem den wenigstens einen Hydraulikkolben aufnehmenden Zylinder kann es sich um den Hauptzylinder der Bremsanlage handeln. Der Hauptzylinder kann dadurch definiert sein, dass dessen Hydraulikkolben (ggf. zusätzlich zum elektromechanischen Aktuator) über einen unmittelbaren, beispielsweise mechanischen oder hydraulischmechanischen Fahrerdurchgriff ("Push-Through") betätigbar ist. Ein solcher Fahrerdurchgriff gewährleistet eine Bremsbarkeit des Fahrzeugs auch bei Ausfall des elektromechanischen Aktuators.

Bei dem den wenigstens einen Hydraulikkolben aufnehmenden Zylinder kann es sich aber auch um einen vom Hauptzylinder der Bremsanlage verschiedenen Zylinder handeln. Dieser Zylinder kann parallel zum Hauptzylinder geschaltet sein. Bei einer solchen Implementierung ist es möglich, den Hydraulikdruck lediglich in Notfällen (z.B. bei Ausfall des elektromechanischen Aktuators) über den Hauptzylinder und den direkten Fahrerdurchgriff zu erzeugen.

Die hier vorgestellte Bremsanlage kann ferner die Aufnahme-Einrichtung umfassen. Gemäß einer ersten Variante ist die Aufnahme-Einrichtung als Druckspeicher ausgebildet. Der Druckspeicher kann ein so genannter "Low Pressure Accumulator" (LPA) sein. Gemäß einer zweiten Variante ist die Aufnahme-Einrichtung als druckloses Hydraulikfluid-Reservoir ausgebildet. Gemäß einer dritten Variante umfasst die Bremsanlage sowohl einen Druckspeicher als auch ein druckloses Hydraulikfluid-Reservoir.

Der elektromechanische Aktuator kann einen Elektromotor und ein mit dem Elektromotor gekoppeltes Getriebe umfassen. Gemäß einer Variante ist das Getriebe mit einem auf dem wenigsten einen Hydraulikkolben einwirkenden Betätigungsglied gekoppelt. Der Elektromotor und das Getriebe können zumindest teilweise (z. B. abschnittsweise) konzentrisch zum Betätigungsglied angeordnet sein. Andere Anordnungen sind ebenfalls denkbar.

In einer Implementierung umfasst die Bremsanlage ferner einen (z.B. mechanischen) Aktuator zur Betätigung eines Hauptzylinder-Kolbens. Dieser Aktuator ermöglicht eine Hydraulikdruckerzeugung in einem "Push-Through"-Modus der Bremsanlage. Alternativ oder zusätzlich hierzu kann der elektromechanische Aktuator zur Hydraulikdruckerzeugung in einem "Brake-By-Wire"-Modus der Bremsanlage ausgelegt sein.

Der zusätzlich zum elektromechanischen Aktuator vorgesehene Aktuator kann ein mit einem Bremspedal gekoppeltes oder koppelbares Kraftübertragungselement umfassen. Bei einer solchen Realisierung kann der elektromechanische Aktuator derart angesteuert werden, dass eine Kraftübertragung vom Kraftübertragungselement zum Hauptzylinder-Kolben unterbunden wird. Zu diesem Zweck kann eine (z.B. mechanische oder hydraulische) Entkoppeleinrichtung vorgesehen sein. Die Kraftübertragung vom Kraftübertragungselement zum Hauptzylinder-Kolben lässt sich auf verschiedene Art und Weise unterbinden. So kann der elektromechanische Aktuator beispielsweise derart angesteuert werden, dass in einem Kraftübertragungsweg zwischen dem Kraftübertragungselement und dem Hauptzylinder-Kolben ein Spalt aufrecht erhalten wird.

Die ersten Ventilanordnungen können jeweils genau ein erstes Ventil umfassen, beispielsweise ein 2/2-Wege-Ventil. Dieses erste Ventil kann bei fehlender elektrischer Ansteuerung geöffnet sein. Alternativ oder zusätzlich hierzu kann die wenigstens eine zweite Ventilanordnung genau ein Ventil umfassen, beispielsweise ein 2/2-Wege-Ventil. Das zweite Ventil kann bei fehlender elektrischer Ansteuerung geschlossen sein.

Allgemein können die Ventilanordnungen eine Drosselwirkung für strömendes Hydraulikfluid besitzen. Die Drosselwirkung der wenigstens einen zweiten Ventilanordnung im geöffneten Zustand kann dabei höher sein als die Drosselwirkung der derselben Radbremse zugeordneten ersten Ventilanordnung im geöffneten Zustand. Die Drosselwirkung kann durch Öffnungsquerschnitte der in den einzelnen Ventilanordnungen verbauten Ventile definiert werden. Der Öffnungsquerschnitt des zweiten Ventils kann weniger als ungefähr 10 mm² betragen, beispielsweise 4 mm². Der Öffnungsquerschnitt des derselben Radbremse zugeordneten ersten Ventils kann hingegen mehr als ungefähr 10 mm² betragen, beispielsweise mehr als 14 mm².

Gemäß einer ersten Variante umfasst die Bremsanlage genau eine zweite Ventilanordnung. Gemäß einer zweiten Variante ist jeder Radbremse eine zweite Ventilanordnung zugeordnet. Dies bedeutet, dass bei beispielsweise vier Radbremsen vier zweite Ventilanordnungen vorgesehen sind. Eine dritte Variante sieht vor, dass die Bremsanlage zwei Bremskreise mit jeweils mindestens zwei Radbremsen umfasst, wobei jedem Bremskreis genau eine zweite Ventilanordnung zugeordnet ist. In diesem Fall wird die Bremsanlage folglich genau zwei zweite Ventilanordnungen umfassen.

Das Steuergerät oder das Steuergerätesystem kann allgemein dazu ausgebildet sein, um die ersten Ventilanordnung während eines fahrerunabhängigen Bremseingriffs, beispielsweise eines Fahrdynamikregeleingriffs, anzusteuern. Ferner kann das Steuergerät oder Steuergerätesystem dazu ausgebildet sein, um auch die wenigstens eine zweite Ventilanordnung während eines fahrerunabhängigen Bremseingriffs, also beispielsweise eines Fahrdynamikregeleingriffs, anzusteuern. In diesem Zusammenhang kann beispielhaft eine ABS- oder ESP-Schlupfregelung genannt werden.

Gemäß einem weiteren Aspekt wird ein Verfahren für das Betreiben einer elektrohydraulischen Fahrzeugbremsanlage angegeben, die einen elektromechanischen Aktuator zur Betätigung wenigstens eines Hydraulikkolbens, um an einer oder mehreren einer Mehrzahl von Radbremsen einen Hydraulikdruck einzustellen, und einen Satz elektrisch ansteuerbarer Ventilanordnungen umfasst. Der Satz Ventilanordnungen umfasst je eine erste Ventilanordnung zwischen einem den wenigstens einen Hydraulikkolben aufnehmenden Zylinder und jeder der Mehrzahl von Radbremsen sowie wenigstens eine zweite Ventilanordnung zwischen einer Aufnahme-Einrichtung für Hydraulikfluid und wenigstens einer der Radbremsen, wobei die wenigstens eine zweite Ventilanordnung parallel zu derjenigen der ersten Ventilanordnungen vorgesehen ist, die derselben Radbremse wie die wenigstens eine zweite Ventilanordnung zugeordnet ist. Das Verfahren umfasst den Schritt des Ansteuerns der ersten Ventilanordnungen und des elektromechanischen Aktuators, um an wenigstens einer der Radbremsen und über die dieser Radbremse zugeordnete, geöffnete erste Ventilanordnung einen Hydraulikdruck aufzubauen sowie über die geöffnete erste Ventilanordnung einen aufgebauten Hydraulikdruck abzubauen.

Das Verfahren kann ferner einen oder mehrere derjenigen Schritte umfassen, die hier im Zusammenhang mit der Funktionalität des Steuergeräts oder des Steuergerätesystems beschrieben werden. Allgemein kann das Verfahren als Antwort auf vom Steuergerät oder Steuergerätesystem ausgegebene Ansteuersignale durchgeführt werden.

Ebenfalls bereitgestellt wird ein Computerprogrammprodukt mit Programmcodemitteln zum Durchführen des hier vorgestellten Verfahrens, wenn das Computerprogrammprodukt auf einem Prozessor abläuft. Das Computerprogrammprodukt kann von einem Kraftfahrzeug-Steuergerät oder Kraftfahrzeug-Steuergerätesystem umfasst sein.

Zur Ansteuerung des elektromechanischen Aktuators, der Ventileinrichtungen sowie optionaler weiterer Komponenten der Fahrzeug-Bremsanlage kann die Bremsanlage geeignete Ansteuereinrichtungen aufweisen. Diese Ansteuereinrichtungen können elektrische, elektronische oder programmgesteuerte Baugruppen sowie Kombinationen hiervon umfassen und in ein gemeinsames Steuergerät oder ein System aus getrennten Steuergeräten (Electronic Control Units, ECUs) integriert sein.

### Kurze Beschreibung der Zeichnungen

Weitere Vorteile, Aspekte und Einzelheiten der hier vorgestellten hydraulischen Fahrzeug-Bremsanlage ergeben sich aus der nachfolgenden Beschreibung exemplarischer Ausführungsbeispiele sowie aus den Figuren. Es zeigen:
- Fig. 1: ein Ausführungsbeispiel einer elektrohydraulischen Fahrzeug-Bremsanlage; und
- Fign. 2 bis 6: Ausführungsbeispiele einer hydraulischen Steuereinheit für die elektrohydraulische Fahrzeug-Bremsanlage gemäß Fig. 1.

### Detaillierte Beschreibung

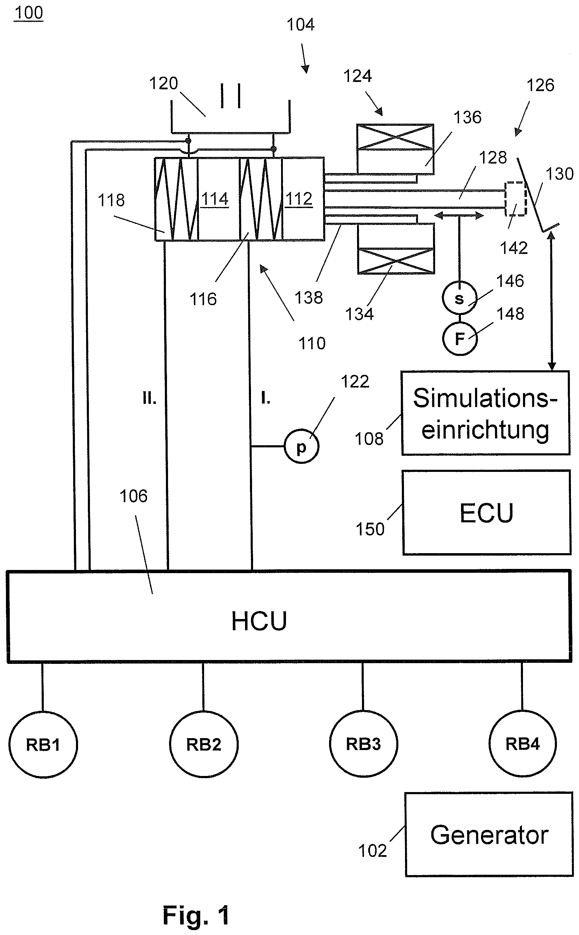

Fig. 1 zeigt ein Ausführungsbeispiel einer hydraulischen Fahrzeug-Bremsanlage 100, die auf dem "Brake-By-Wire" (BBW)-Prinzip basiert. Die Bremsanlage 100 kann (z.B. bei Hybrid-Fahrzeugen) in einem regenerativen Modus betrieben werden. Zu diesem Zweck ist eine elektrische Maschine 102 vorgesehen, die eine Generatorfunktionalität bietet und selektiv mit Rädern und einem Energiespeicher, z.B. einer Batterie (nicht dargestellt), verbunden werden kann. In anderen Ausführungsbeispielen kann die elektrische Maschine 102 entfallen (z.B. bei herkömmlichen Fahrzeugen ohne Rekuperation).

Wie in Fig. 1 veranschaulicht, umfasst die Bremsanlage 100 eine Hauptzylinder-Baugruppe 104, die an einer Fahrzeug-Spritzwand montiert werden kann. Eine hydraulische Steuereinheit (Hydraulic Control Unit, HCU) 106 der Bremsanlage 100 ist funktional zwischen der Hauptzylinder-Baugruppe 104 und vier Radbremsen RB des Fahrzeugs angeordnet. Die HCU 106 ist als integrierte Baugruppe ausgebildet und umfasst eine Vielzahl von hydraulischen Einzelkomponenten sowie mehrere Fluideinlässe und Fluidauslässe. Ferner ist eine nur schematisch dargestellte Simulationseinrichtung 108 zum Bereitstellen eines Pedalrückwirkungsverhaltens im BBW-Betrieb (Betriebsbremsbetrieb) vorgesehen. Die Simulationseinrichtung 108 kann auf einem mechanischen oder hydraulischen Prinzip basieren. Im zuletzt genannten Fall kann die Simulationseinrichtung 108 an die HCU 106 angeschlossen sein.

Die Hauptzylinder-Baugruppe 104 weist einen Hauptzylinder 110 mit einer darin verschieblich aufgenommenen Hydraulikkolbenanordnung 112, 114 auf. Die Kolbenanordnung ist im Ausführungsbeispiel als Tandemkolben mit einem Primärkolben 112 und einem Sekundärkolben 114 ausgebildet und definiert im Hauptzylinder 110 zwei voneinander getrennte Hydraulikkammern 116,118. Die beiden Hydraulikkammern 116,118 des Hauptzylinders 110 sind zur Versorgung mit Hydraulikfluid über jeweils einen Anschluss mit einem drucklosen Hydraulikfluid-Reservoir 120 verbunden. Jede der beiden Hydraulikkammern 116,118 (sowie im vorliegenden Ausführungsbeispiel das Hydraulikfluid-Reservoir 120) sind ferner mit der HCU 106 gekoppelt. Die Hydraulikkammern 116,118 definieren jeweils einen Bremskreis I. und II. Im Ausführungsbeispiel ist für den Bremskreis I. ein Hydraulikdrucksensor 122 vorgesehen, der auch in die HCU 106 integriert werden könnte.

Die Hauptzylinder-Baugruppe 104 umfasst ferner einen elektromechanischen Aktuator (d.h. ein elektromechanisches Stellglied) 124 sowie einen mechanischen Aktuator (d.h. ein mechanisches Stellglied) 126. Sowohl der elektromechanische Aktuator 124 als auch der mechanische Aktuator 126 ermöglichen eine Betätigung der Kolbenanordnungen 112, 114 im Hauptzylinder 110 und wirken dazu auf eine eingangsseitige Stirnfläche dieser Kolbenanordnung 112, 114, genauer gesagt des Primärkolbens 112, ein. Die Aktuatoren 124,126 sind derart ausgebildet, dass sie unabhängig voneinander (und getrennt oder gemeinsam) die Hauptzylinder-Kolbenanordnung 112, 114 zu betätigen vermögen.

Der mechanische Aktuator 126 besitzt ein Kraftübertragungselement 128, das stangenförmig ausgebildet ist und unmittelbar auf die eingangsseitige Stirnfläche des Primär-Kolbens 112 einzuwirken vermag. Wie in Fig. 1 gezeigt, ist das Kraftübertragungselement 128 mit einem Bremspedal 130 gekoppelt oder koppelbar. Es versteht sich, dass der mechanische Aktuator 126 weitere Komponenten umfassen kann, die funktional zwischen dem Bremspedal 130 und dem Hauptzylinder 110 angeordnet sind. Derartige weitere Komponenten können sowohl mechanischer als auch hydraulischer Natur sein. Im zuletzt genannten Fall ist der Aktuator 126 als hydraulischmechanischer Aktuator 126 ausgebildet.

Der elektromechanische Aktuator 124 weist einen Elektromotor 134 sowie ein dem Elektromotor 134 abtriebsseitig nachfolgendes Getriebe 136, 138 auf. Im Ausführungsbeispiel ist das Getriebe eine Anordnung aus einer drehbar gelagerten Mutter 136 und einer mit der Mutter 136 (z.B. über Wälzkörper wie Kugeln) in Eingriff stehenden und in axialer Richtung beweglichen Spindel 138. In anderen Ausführungsbeispielen können Zahnstangengetriebe oder andere Getriebetypen zum Einsatz gelangen.

Der Elektromotor 134 besitzt im vorliegenden Ausführungsbeispiel eine zylindrische Bauform und erstreckt sich konzentrisch zum Kraftübertragungselement 128 des mechanischen Aktuators 126. Genauer gesagt ist der Elektromotor 134 radial außen bezüglich des Kraftübertragungselements 128 angeordnet. Ein Rotor (nicht dargestellt) des Elektromotors 134 ist drehfest mit der Getriebemutter 136 gekoppelt, um diese in Drehung zu versetzen. Eine Drehbewegung der Mutter 136 überträgt sich derart auf die Spindel 138, dass eine axiale Verschiebung der Spindel 138 resultiert. Die in Fig. 1 linke Stirnseite der Spindel 138 kann dabei (ggf. über ein Zwischenglied) in Anlage an die in Fig. 1 rechte Stirnseite des Primärkolbens 112 gelangen und in Folge dessen den Primärkolben 112 (zusammen mit dem Sekundärkolben 114) in Fig. 1 nach links verschieben. Ferner lässt sich die Kolbenanordnung 112, 114 auch von dem sich durch die (als Hohlkörper ausgebildete) Spindel 138 erstreckenden Kraftübertragungselement 128 des mechanischen Aktuators 126 in Fig. 1 nach links verschieben. Ein Verschieben der Kolbenanordnung 112, 114 in Fig. 1 nach rechts wird mittels des in den Hydraulikkammern 116,118 herrschenden Hydraulikdrucks (bei Loslassen des Bremspedals 130 und ggf. bei motorischem Verschieben der Spindel 138 nach rechts) bewerkstelligt.

Wie in Fig. 1 gezeigt, ist eine Entkoppeleinrichtung 142 funktional zwischen dem Bremspedal 130 und dem Kraftübertragungselement 128 vorgesehen. Die Entkoppeleinrichtung 142 ermöglicht ein selektives Entkoppeln des Bremspedals 130 von der Kolbenanordnung 112, 114 im Hauptzylinder 110, beispielsweise durch Unterbrechung des Kraftübertragungswegs zwischen dem Bremspedal 130 und dem Kraftübertragungselement 128. Mögliche Realisierungen der Hauptzylinder-Baugruppe 104 allgemein sowie im Besonderen der Simulationseinrichtung 108 sowie der Entkoppeleinrichtung 142 sind in der DE 10 2011 101066 A1 beschrieben. Nachfolgend werden die Funktionsweisen der Entkoppeleinrichtung 142 und der Simulationseinrichtung 108 näher erläutert. In diesem Zusammenhang ist nochmals darauf hinzuweisen, dass die in Fig. 1 dargestellt Bremsanlage 100 auf dem Prinzip des Brake-By-Wire (BBW) basiert. Dies bedeutet, dass im Rahmen einer normalen Betriebsbremsung sowohl die Entkoppeleinrichtung 142 als auch die Simulationseinrichtung 108 aktiviert sind. Demgemäß ist das Bremspedal 130 vom Kraftübertragungselement 128 (und damit von der Kolbenanordnung 112, 114 im Hauptzylinder 110) entkoppelt, und eine Betätigung der Kolbenanordnung 112, 114 kann ausschließlich über den elektromechanischen Aktuator 124 erfolgen. Das gewohnte Pedalrückwirkverhalten wird in diesem Fall von der mit dem Bremspedal 130 gekoppelten Simulationseinrichtung 108 bereitgestellt.

Im Rahmen der Betriebsbremsung übernimmt damit der elektromechanische Aktuator 124 die Bremskrafterzeugungsfunktion. Eine durch Niedertreten des Bremspedals 130 vom Fahrer angeforderte Bremskraft wird dabei dadurch erzeugt, dass mittels des Elektromotors 134 die Spindel 138 in Fig. 1 nach links verschoben und dadurch auch der Primärkolben 112 und der Sekundär-Kolben 114 des Hauptzylinders 110 nach links bewegt werden. Auf diese Weise wird Hydraulikfluid aus den Hydraulikkammern 116,118 über die HCU 106 unter Druckaufbau zu den Radbremsen RB gefördert.

Die Höhe der daraus resultierenden Bremskraft der Radbremsen RB wird in Abhängigkeit einer sensorisch erfassten Bremspedalbetätigung gemäß dem Fahrerwunsch eingestellt. Zu diesem Zweck sind ein Wegsensor 146 und ein Kraftsensor 148 vorgesehen, deren Ausgangssignale von einem den Elektromotor 134 ansteuernden Steuergerät (Electronic Control Unit, ECU) 150 ausgewertet werden. Der Wegsensor 146 erfasst einen mit einer Betätigung des Bremspedals 130 in Zusammenhang stehenden Betätigungsweg, während der Kraftsensor 148 eine damit in Zusammenhang stehende Betätigungskraft erfasst. In Abhängigkeit von den Ausgangssignalen der Sensoren 146, 148 (sowie ggf. des Drucksensors 122) wird vom Steuergerät 150 ein Ansteuersignal für den Elektromotor 134 erzeugt. Die Signale der beiden Sensoren 146, 148 können untereinander plausibilisiert werden. In einer einfacheren Ausführungsform kann einer der beiden Sensoren 146, 148 entfallen.

Wird bei einer Betriebsbremsung der regenerative Bremsbetrieb aktiviert, so wird der Generator 102 in bekannter Weise hinzugeschaltet. Um die Generatorwirkung energetisch voll ausschöpfen zu können, wird üblicherweise an den Radbremsen RB der Räder, die über den Generator 102 abgebremst werden, kein Hydraulikdruck aufgebaut. Die Hydraulikkammern 116, 118 werden hierzu über die HCU 106 von den entsprechenden Radbremsen RB abgekoppelt.

Bei einer Betätigung des Bremspedals 130 müssen dann auch der Primärkolben 112 und der Sekundärkolben 114 in Fig. 1 nach links verschoben werden (typischerweise mittels des elektromechanischen Aktuators 124), damit genügend axialer Freiraum für das bei Betätigung des Bremspedals 130 ebenfalls verschobene Kraftübertragungselement 128 zur Verfügung steht. Das aus den Hydraulikkammer 116,118 verdrängte Hydraulikfluid darf aber nicht zu den Radbremsen RB gelangen, um die Generatorbremskraft maximal ausnutzen zu können (d.h. um keinen hydraulischen Druck aufzubauen). Zu diesem Zweck wird in der HCU 106 eine Verbindung zwischen der Hydraulikkammer 116 und dem drucklosen Reservoir 120 (und/oder zwischen der Hydraulikkammer 118 und dem Reservoir 120) geöffnet. Das aus den Hydraulikkammern 116,118 entweichende Hydraulikfluid kann so zum drucklosen Reservoir 120 gelangen, und ein Druckaufbau an einer oder mehreren der Radbremsen RB unterbleibt. Diese so genannte Leerweg-Freischaltung wird weiter unten in Bezug auf die HCU 106 näher erläutert.

Auch die Hydraulikdruckmodulation in einem Fahrdynamikregelbetrieb (z.B. während einer Betriebsbremsung) erfolgt mittels des elektromechanischen Aktuators 124. Mit anderen Worten wird der elektromechanische Aktuator 124 nicht nur zur Bremskrafterzeugung im Rahmen einer Betriebsbremsung, sondern auch beispielsweise zum Zweck der Fahrdynamikregelung (also z.B. im ABS- und/oder ASR- und/oder ESP-Regelbetrieb) angesteuert. Zusammen mit der Ansteuerung des elektromechanischen Aktuators 124 erfolgt eine radindividuelle oder radgruppenindividuelle Ansteuerung von Ventilen der HCU 106 zur Implementierung von radindividuellen oder radgruppenindividuellen Druckaufbau-, Druckhalte- und Druckabbauphasen in Abhängigkeit von einer in der ECU 150 hinterlegten Fahrdynamikregelstrategie.

Nachdem die Vorgänge bei einer Betriebsbremsung näher erläutert wurden, wird jetzt kurz der Notbremsbetrieb ("Push-Through"-Modus) geschildert. Der Notbremsbetrieb ist beispielsweise die Folge des Ausfalls der Fahrzeugbatterie oder einer Komponente des elektromechanischen Aktuators 124 und führt zu einer Deaktivierung der Entkoppeleinrichtung 142 (und, optional, der Simulationseinrichtung 108) auf hydraulische Weise innerhalb der HCU 106. Die Deaktivierung der Entkoppeleinrichtung 142 (und, optional, der Simulationseinrichtung 108) im Notbremsbetrieb ermöglicht eine direkte Koppelung des Bremspedals 130 mit dem Hauptzylinder 110, nämlich über das Kraftübertragungselement 128. Die Notbremsung wird eingeleitet durch Niedertreten des Bremspedals 130. Die Bremspedalbetätigung überträgt sich dann über das Kraftübertragungselement 128 auf die Kolbenanordnung 112, 114. In Folge dessen verschiebt sich die Kolbenanordnung 112, 114 in Fig. 1 nach links. Dadurch wird zur Bremskrafterzeugung Hydraulikfluid aus den Hydraulikkammern 116, 118 des Hauptzylinders 110 über die HCU 106 zu den Radbremsen RB gefördert.

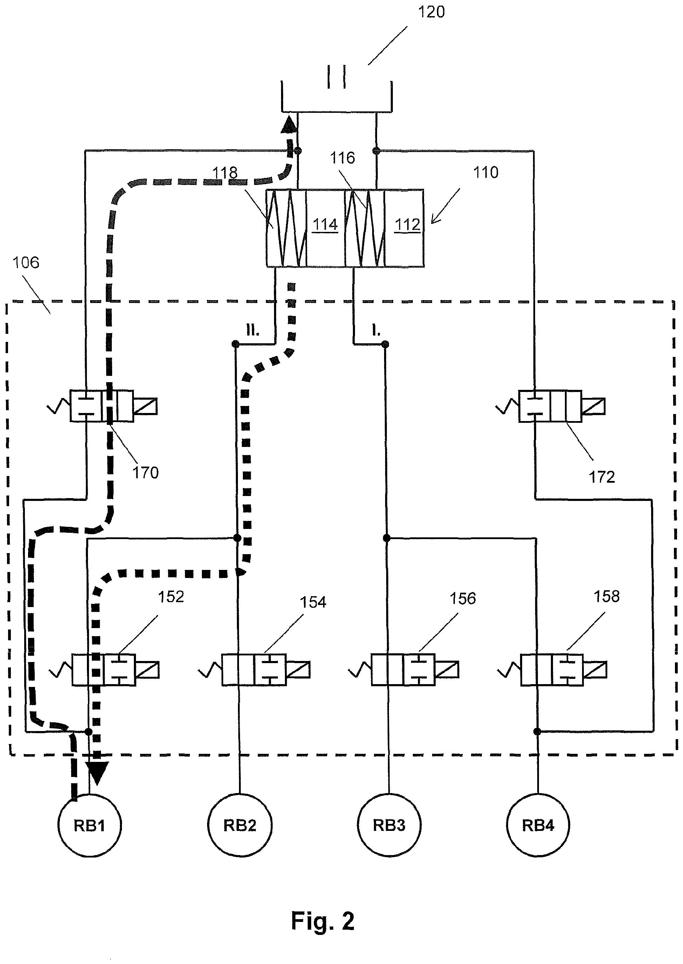

Im Folgenden werden unter Bezugnahme auf die Fign. 2 bis 6 verschiedene Ausführungsbeispiele der HCU 106 erörtert. Diese Ausführungsbeispiele basieren zum Teil auf der in der Fig. 1 dargestellten Bremsanlage 100 mit der entsprechenden Hauptzylinder-Baugruppe 104. Die entsprechenden Komponenten sind in den Fign. 2 bis 6 daher lediglich noch schematisch dargestellt. Es versteht sich, dass die in den Fign. 2 bis 6 dargestellten Ausführungsbeispiele auch im Zusammenhang mit anderen Bremsanlagen, und insbesondere im Zusammenhang mit anderen Hauptzylinder Baugruppen, realisierbar sind.

Fig. 2 zeigt ein erstes Ausführungsbeispiel der HCU 106. Wie in Fig. 2 veranschaulicht, umfasst die HCU 106 einen Satz elektrisch ansteuerbarer Ventilanordnungen 152, 154, 156, 158, 170, 172 sowie erforderlichenfalls weitere Komponenten, die jedoch nicht dargestellt sind. Die Ventilanordnungen 152, 154, 156, 158, 170, 172 sind in Fig. 2 jeweils in ihrem elektrisch unbetätigten Zustand (also in ihrem Grundzustand bei fehlender elektrischen Ansteuerung) dargestellt und umfassen jeweils genau ein Ventil (nämlich im Ausführungsbeispiel gemäß Fig. 2 jeweils ein 2/2-WegeVentil). Aus diesem Grund wird im Folgenden teilweise von einem Ventil anstelle von einer Ventilanordnung gesprochen, wenn die Ventilanordnung in einem Ausführungsbeispiel ein einziges Ventil ohne weitere Beschaltung (z.B. ein dazu paralleles Rückschlagventil) umfasst. Es ist jedoch darauf hinzuweisen, dass in anderen Ausführungsbeispielen eine einzelne Ventilanordnung auch mehr als ein Ventil umfassen kann.

Gemäß einer Ausführung sind die Ventile 152, 154, 156, 158 als nichtregelbare Absperrventile ausgebildet. In diesem Fall kann daher kein Öffnungsquerschnitt eingestellt werden, wie es beispielsweise bei Proportionalventilen der Fall wäre. In einer anderen Ausführung sind die Ventile 152, 154, 156, 158 als Proportionalventile mit einstellbarem Öffnungsquerschnitt realisiert.

Unter erneuter Bezugnahme auf Fig. 2 ist zwischen dem Hauptzylinder 110 und jeder der vier Radbremsen RB je ein erstes Ventil 152, 154, 156, 158 angeordnet. Ferner ist für jeden der beiden Bremskreise I. und II. je ein zweites Ventil 170, 172 zwischen dem drucklosen Hydraulikfluid-Reservoir 120 und jeder der beiden Radbremsen RB1, RB4 vorgesehen. Von der jeweiligen Radbremse RB1, RB4 aus betrachtet ist jedes der beiden Ventile 170, 172 parallel zu dem anderen Ventil 152, 158 geschaltet, welches von der jeweiligen Radbremse RB1, RB4 zum Hauptzylinder 110 führt. Im vorliegenden Fall ist also pro Bremskreis I. und II. genau ein Ventil 170, 172 vorhanden.

Im Ausführungsbeispiel liegt eine diagonale Bremskreisaufteilung vor, was bedeutet, dass die Radbremsen RB1 und RB4 jeweils Rädern der Hinterachse und die Radbremsen RB2 und RB3 jeweils Rädern der Vorderachse (oder umgekehrt) zugeordnet sind. Auf diese Weise lässt sich über den Betätigungszustand der Ventile 170, 172 der Hydraulikdruck an beiden Radbremsen RB der Hinterachse (oder der Vorderachse) beeinflussen, oder eine Leerweg-Freiwegschaltung gezielt in Bezug auf eine der Fahrzeugachsen implementieren. Es kann auch allgemein unter Druck stehendes Hydraulikfluid aus dem Hauptzylinder 110 durch Öffnen eines oder beide der Ventilpaare 152 und 170 bzw. 158 und 172 in das drucklose Reservoir 120 abgelassen werden.

Die vier zwischen dem Hauptzylinder 110 und den Radbremsen RB vorgesehenen Ventile 152, 154, 156, 158 werden von der ECU 150 bei einer Betriebsbremsung, insbesondere im Rahmen von Fahrdynamikregeleingriffen, angesteuert. Wie nachstehend erläutert werden wird, können auch die beiden Ventile 170, 172, die parallel zu den beiden Ventilen 152, 158 vorgesehen sind, von der ECU 150 im Fahrdynamikregelbetrieb angesteuert werden. Alternativ oder zusätzlich hierzu können die beiden Ventilpaare 152, 170 und 158, 172 auch zu anderen Zwecken, wie der Leerweg-Freischaltung, angesteuert werden. In der in Fig. 2 gezeigten Implementierung sind zwischen den Ventilen 152,154,156,158 und dem Hauptzylinder 110 keine weiteren Ventile für Fahrdynamikregelzwecke vorhanden.

Die ECU 150 ist dazu ausgebildet, um die Ventile 152, 154, 156, 158 sowie den elektromechanischen Aktuator 124 (vgl. Fig. 1) derart anzusteuern, dass über das jeweilige Ventil 152, 154, 156, 158 sowohl ein Hydraulikdruck an der entsprechenden Radbremse RB aufgebaut werden kann als auch ein an der Radbremse RB aufgebauter Hydraulikdruck wieder abbaubar ist. Das entsprechende Ventil 152, 154, 156, 158 befindet sich daher sowohl für den Hydraulikdruckaufbau wie auch für den Hydraulikdruckabbau -jedenfalls bei einigen (Fahrdynamik-) Regelstrategien - in einem geöffneten Zustand, um Hydraulikfluid vom Hauptzylinder 110 zu der jeweiligen Radbremse RB zu fördern (vgl. gepunkteten Pfeil für Ventil 152) und um umgekehrt unter Druck stehendes Hydraulikfluid wieder aus der jeweiligen Radbremse RB in Richtung des Hauptzylinders 110 strömen zu lassen (entgegen der Richtung des gepunkteten Pfeils).

Die Ventile 152, 154, 156, 158 und, in manchen Ausführungsbeispielen, die Ventile 170, 172 können in einem Zeitmultiplexbetrieb ansteuerbar sein. Dabei können allgemein einzelne Zeitschlitze vorgegeben werden. Einem einzelnen Zeitschlitz wiederum können eine oder mehrere der Ventile 152, 154, 156, 158 zugeordnet sein, die während des entsprechenden Zeitschlitzes ein- oder mehrfach betätigt werden (beispielsweise durch Änderung des Schaltzustands von geöffnet nach geschlossen und/oder umgekehrt). Gemäß einer Realisierung ist jedem der Ventile 152, 154, 156, 158 genau ein Zeitschlitz zugeordnet. Einer oder mehreren weiteren Ventilanordnungen (in Fig. 2 nicht dargestellt) können ein oder mehrere weitere Zeitschlitze zugeordnet sein.

Die Zuordnung zwischen Zeitschlitzen und Ventilanordnungen kann statisch festgelegt sein oder aber dynamisch (z.B. während eines Fahrdynamikregeleingriffs) ermittelt werden. Eine dynamische Ermittlung der Zuordnung kann beispielsweise umfassen, dass für eine oder mehrere der Ventilanordnungen eine höhere Priorität in Bezug auf eine Hydraulikdruckänderung ermittelt wird als für eine oder mehrere andere Ventilanordnungen. Der nächste verfügbare Zeitschlitz kann dann dynamisch der oder den Ventilanordnungen mit höherer Priorität zugeteilt werden. Unabhängig davon können die Ventilanordnungen bei gleicher Priorität in einer vorgegebenen Abfolge (z.B. seriell) jeweils einem Zeitschlitz zugeordnet sein.

Im Zeitmultiplexbetrieb können beispielsweise zunächst mehrere oder alle der Ventile 152, 154, 156, 158 geöffnet sein und gleichzeitig mittels des elektromechanischen Aktuators 124 ein Hydraulikdruck an mehreren oder allen zugeordneten Radbremsen RB aufgebaut werden. Bei Erreichen eines radindividuellen Zieldrucks schließt dann das entsprechende Ventil 152, 154, 156, 158 zeitschlitz-synchron, während eines oder mehrere weitere Ventile 152, 154, 156, 158 so lange weiterhin geöffnet bleiben, bis auch dort der jeweilige Zieldruck erreicht ist. Die vier Ventile 152, 154, 156, 158 werden daher im Zeitmultiplexbetrieb individuell pro Rad oder Radgruppe in Abhängigkeit des jeweiligen Zieldrucks geöffnet und geschlossen. Das Schließen eines der Ventile 152, 154, 156, 158 (bei geschlossenen Ventilen 170, 172) ermöglicht das Realisieren einer Druckhaltephase während einer Fahrdynamikregelung.

Zum Druckabbau an den Radbremsen RB2 und RB3 wird das entsprechende Ventil 154, 156 geöffnet und der elektromechanische Aktuator 124 derart angesteuert, dass die Kolbenanordnung 112, 114 im Hauptzylinder 110 einen Rückhub durchführt. Auf diese Weise kann Hydraulikfluid aus den Radbremsen RB2 und RB3 in die Hauptzylinderkammern 116, 118 zurückströmen. Der Druckabbau an den Radbremsen RB1 und RB4 kann auf zwei unterschiedliche Weisen erfolgen. Zum einen können bei dem bereits beschriebenen Rückhub der Kolbenanordnung 112, 114 die Ventile 152, 158 (bei geschlossenen Ventilen 170, 172) geöffnet werden, so dass Hydraulikfluid aus den Radbremsen RB1 und RB4 in die Hauptzylinder-Kammern 116, 118 strömen kann (entgegen der Richtung des gepunkteten Pfeils für Radbremse RB1). Alternativ hierzu können die Ventile 152, 158 im Rahmen einer Druckabbauphase an den Radbremsen RB1 und RB4 geschlossen bleiben und die Ventile 170, 172 geöffnet werden, so dass unter Druck stehendes Hydraulikfluid aus den Radbremsen RB1 und RB4 in das drucklose Reservoir 120 entweichen kann (in Richtung des gestrichelten Pfeils für Rabbremse RB1). Der an den Radbremsen RB1 und RB4 aufgebaute Hydraulikdruck kann daher wahlweise durch Öffnen der Ventile 152, 158 oder durch Öffnen der Ventile 170, 172 abgebaut werden.

Ein Druckabbau über eines oder beide der Ventile 170, 172 ist in manchen Ausführungsbeispielen dazu vorgesehen, sicherheitskritische Nachteile des Zeitmultiplexbetriebs bezüglich der Ventile 152, 154, 156, 158 zu vermeiden. Wird beispielsweise im Rahmen einer Schlupfregelung (z.B. im ABS- oder im ESP-Regelbetrieb) erkannt, dass an der Radbremse RB2 ein Druckaufbau erforderlich ist, während an der Radbremse RB4 ein Druckabbau notwendig ist und im seriellen Zeitmultiplex-Betrieb gerade ein dem Ventil 152 (und damit der Radbremse RB1) zugeordneter Zeitschlitz vorherrscht, kann zwar im nächsten Zeitschlitz der Druckabbau an der Radbremse RB2 erfolgen, aber erst drei Zeitschlitze später der Druckabbau an der Radbremse RB4, sofern dieser Druckabbau im Zeitmultiplexbetrieb über das Ventil 158 erfolgen müsste. Selbst wenn man im vorliegenden Fall vom seriellen Zeitmultiplex-Betrieb abweichen würde und man beispielsweise dem Ventil 158 an der Radbremse RB4 eine hohe Priorität einräumt, so dass das Ventil 158 bereits im nächsten vorhandenen Zeitschlitz angesteuert werden kann, ist der vorherrschende Zeitschlitz für die Radbremse RB1 mit einer gewissen Stellzeit von typischerweise 15 bis 20 ms für das Ventil 152 verbunden. Diese Stellzeit bewirkt daher einen verzögerten Druckabbau an der Radbremse RB4.

Erfolgt der Druckabbau an der Radbremse RB4 aber nicht unverzüglich, sondern nur wenige Millisekunden zu spät, stürzt das entsprechende Rad in einen höheren Schlupfwert, der dann einen noch größeren Druckabbau zur "Radwiedererholung" erfordert, als es ursprünglich notwendig gewesen wäre (also beispielsweise wenn der Druckabbau an der Radbremse RB4 synchron mit dem Druckaufbau an der Radbremse RB2 erfolgen könnte). Insbesondere auf Fahrbahnen mit ausgeprägtem Maximum der µ-Schlupfkurve können bereits geringe Verzögerungen beim Druckabbau einen Fahrdynamik-Regelzyklus negativ beeinflussen.

Um die dem Zeitmultiplex-Betrieb inhärente Druckabbau-Verzögerung beispielsweise an der Radbremse RB4 zu vermeiden, wird daher unverzüglich nach Erkennen eines Druckabbau-Erfordernisses an der Radbremse RB4 bei geschlossenem Ventil 158 von der ECU 150 das Ventil 172 geöffnet. Auf diese Weise erfolgt ein sofortiger Druckabbau an der Radbremse RB4, da das unter Druck stehende Hydraulikfluid über das geöffnete Ventil 172 in das drucklose Reservoir 120 strömen kann. Das Öffnen des Ventils 172 kann somit bereits zu einem Zeitpunkt erfolgen, der vor dem nächstem, dem Ventil 158 und damit der Radbremse RB4 zugeordneten oder prioritätsbasiert zuordenbaren Zeitschlitz im Zeitmultiplex-Betrieb liegt.

Damit ermöglicht das Vorsehen der beiden Ventile 170, 172 beispielsweise einen Druckabbau an den Radbremsen RB1 und RB4 simultan mit einem Druckaufbau an einer der Radbremsen RB2 und RB3. Im Ausführungsbeispiel gemäß Fig. 2, in dem zwei der vier Radbremsen RB mit den Ventilen 170, 172 beschaltet sind, kann daher an einer Radbremse RB je Bremskreis ein vom Zeitmultiplex-Betrieb unabhängiger Druckabbau stattfinden. Diese Möglichkeit schafft eine höhere Systemsicherheit im Zeitmultiplex-Betrieb, da sich eine Verzögerung von Druckabbauphasen mit geringem zusätzlichen Aufwand vermeiden lässt.

Gemäß einer Implementierung findet ein Druckabbau über eines oder beide der Ventile 170, 172 im Rahmen eines Fahrdynamikregeleingriffis lediglich dann statt, wenn eine kritische Situation innerhalb des Regeleingriffs vorliegt, die beispielsweise einen simultanen Druckaufbau und Druckabbau an unterschiedlichen Radbremsen RB ohne jeglichen zeitlichen Verzug erfordert. In unkritischen Regelsituationen können die beiden Ventile 170, 172 hingegen geschlossen bleiben, und der Druckabbau kann in regulärer Weise über die hierzu parallel geschalteten Ventile 152 ,158 erfolgen.

Eine Regelstrategie kann ferner vorsehen, dass lediglich dann über eines oder beide der Ventile 170, 172 Hydraulikdruck abgebaut wird, wenn der Zeitmultiplex-Betrieb bereits in einen zeitlichen Verzug geraten ist, also der berechnete Zeitpunkt (z.B. Zeitschlitz) für einen erforderlichen Hydraulikdruckabbau an einer der Radbremsen RB1 und RB4 bereits verstrichen ist (oder verstreichen wird, bevor eines der Ventile 152, 158 geöffnet werden kann). Ist hingegen ein ausreichender zeitlicher Puffer vorhanden, bleiben die Ventile 170, 172 unbetätigt (also geschlossen), und der Hydraulikdruckabbau an den Radbremsen RB1 und RB4 erfolgt in herkömmlicher Weise über die Ventile 152 ,158. Gemäß einer Variante erfolgt die Priorisierung der Radbremsen RB im Zeitmultiplex-Betrieb derart, dass ein Druckabbau an den Vorderrädern (hier RB2 und RB3) Vorrang vor allen anderen Anforderungen hat. Aus diesem Grund könnten bei einer Ausführungsform einer diagonalen Bremskraftaufteilung die Radbremsen RB1 und RB4 den Vorderrädern werden.

Gemäß einer anderen Variante wird der Hydraulikdruckabbau über die Ventile 170, 172 an den der Hinterachse zugeordneten Radbremsen RB durchgeführt. Bei einer diagonalen Aufteilung der Bremskreise I und II bedeutet dies, dass die beiden Radbremsen RB1 und RB4 in Fig. 2 den Rädern der Hinterachse zugeordnet sind. Da an der Hinterachse regelmäßig geringere Hydraulikfluidvolumina abzubauen sind, kommt es zu einem geringeren Volumenverbrauch, es wird also weniger Hydraulikfluidvolumen in das drucklose Reservoir 120 abgelassen (das möglicherweise während eines langen Fahrdynamikregeleingriffs später wieder aus dem Reservoir 120 nachgesaugt werden müsste).

Ist im Rahmen eines Fahrdynamikregeleingriffs die Ansteuerung der Ventile 152, 154, 156, 158 und des elektromechanischen Aktuators 124 im Zeitmultiplex-Betrieb gerade beim Druckaufbau an der Radbremse RB2, der insgesamt eine Stellzeit von ungefähr 15 bis 20 ms erfordert, so kann dieser Druckabbau aufgrund der vorgegebenen Zeitschlitz-Dauer nicht abgebrochen werden, um einen zwischenzeitlich priorisierten Druckabbau an der Radbremse RB4 zu starten. Der begonnene Druckaufbau muss zuerst zu Ende gebracht werden. Bei der hier vorgeschlagenen Lösung kann die Multiplexregelung wie bisher prioritätsbasiert berechnet und ausgeführt werden, erforderlichenfalls kann die Multiplexregelung jedoch durch einen individuellen Druckabbau über eines oder beide der Ventile 170, 172 entlastet werden. Damit ist ein individueller Druckabbau an den Radbremsen RB1 und RB4 ohne zeitliche Verzögerung möglich, während die Multiplexregelung einfach weiterläuft.

Durch Öffnen von wenigstens zweien der Ventile 152, 158, 170, 172, die seriell geschaltet sind, können der Hauptzylinder 110 einerseits und, auf der anderen Seite, das drucklose Hydraulikfluidreservoir 120 selektiv miteinander verbunden werden ("hydraulischer Kurzschluss"). Dies ist in Fig. 2 durch die Sequenz aus einem gepunktetem und einem gestricheltem Pfeil angedeutet.

Im Fall des hydraulischen Kurzschlusses kann unter Druck stehendes Hydraulikfluid aus dem Hauptzylinder 110 in das drucklose Reservoir 120 abgelassen werden. Es ist hierbei nicht notwendig, den elektromechanischen Aktuator 124 anzusteuern oder zu betätigen (was z.B. bei manchen Fahrdynamikregeleingriffen wünschenswert ist). Mit anderen Worten müssen die Kolben 112, 114 zum Hydraulikdruckabbau nicht zurücklaufen (in Fig. 2 nach rechts), sie können vielmehr stationär bleiben.

Allgemein kann der hydraulische Kurzschluss und der damit einhergehende Hydraulikdruckabbau im Hauptzylinder 110 im Rahmen eines Fahrdynamikregelbetriebs erfolgen, wenn der Hydraulikdruck im Hauptzylinder 110 über einem Bremsdruckwert liegt, an dem ein dem jeweils geöffnenten Ventilpaar (in Fig. 2 sind das die Ventilpaare 152/170 bzw. 158/172) zugeordnetes Rad blockiert. Der Hydraulikdruckabbau kann dabei derart (z.B. geregelt) erfolgen, dass an der betreffenden Radbremse nach dem Abbau ein Bremsdruckwert vorliegt, der unter dem Blockierbremsdruckwert, aber über Null liegt. Der entsprechende Hydraulikdruckabbau kann während des Multiplex-Betriebs und innerhalb des der betreffenden Radbremse zugeordneten Zeitschlitzes erfolgen.

Ferner können im Fall des hydraulischen Kurzschlusses die Kolben 112, 114 im Hauptzylinder 110 mittels des elektromechanischen Aktuators 124 in Fig. 2 nach links verschoben werden ("Leerweg-Freischaltung"). Die Leerweg-Freischaltung kann beispielsweise eine in vielen Betriebssituationen unerwünschte Kraftübertragung von dem bremspedalbetätigten Kraftübertragungselement 128 auf die Kolbenanordnung 112, 114 im Hauptzylinder 110 verhindern.

Im Fahrdynamikregelbetrieb und in anderen Fällen gibt es nämlich Betriebssituationen, in denen der Fahrer über eine hohe Pedalkraft einen großen Pedalweg (und damit großen Vorschub des Kraftübertragungselements 128) einstellt, gleichzeitig aber nur wenig Hydraulikfluidvolumen aus dem Hauptzylinder 110 mittels des elektromechanischen Aktuators 124 zu den Radbremsen RB zu fördern ist (vgl. Fig. 1). Bei niedrigem Fahrbahnreibwert sind beispielsweise lediglich ein geringer Bremsdruck und damit eine entsprechend geringere Hydraulikfluidaufnahme in jeder der Radbremsen RB notwendig, was prinzipiell den Vorschub der Zylinderanordnung 112, 114 stark begrenzt. Wenn nun gleichzeitig das Kraftübertragungselement 128 aufgrund einer hohen Bremskraftanforderung einen großen Weg zurücklegt, muss über die Leerweg-Freischaltung mittels des elektromechanischen Aktuators 124 Hydraulikfluidvolumen aus dem Hauptzylinder 110 in das drucklose Reservoir 120 gefördert werden. Dazu wird - damit das Kraftübertragungselement 128 die Kolbenanordnung 112, 114 nicht mit der Pedalkraft beaufschlagt (also um beispielsweise eine Lücke zwischen dem Kraftübertragungselement 128 und dem von dieser beaufschlagbaren Primärkolben 112 aufrecht zu erhalten) - wenigstens eines der beiden Ventilpaare 152, 170 und 158, 172 geöffnet. Die daraus resultierende Leerweg-Freischaltung ermöglicht es, mittels des elektromechanischen Aktuators 124 die Kolbenanordnung 112, 114 soweit zu verschieben, dass es zu keiner Kraftübertragung von dem nacheilenden Kraftübertragungselement 128 auf die Kolbenanordnung 112, 114 kommt.

Die Leerweg-Freischaltung kann in einem Ausführungsbeispiel ohne Bremsdruckabsenkung an den entsprechenden Radbremsen RB1 und RB4 durchgeführt werden. Gemäß einer Variante wird die Zylinderanordnung 112, 114 vom elektromechanischen Aktuator 124 nämlich genau so schnell betätigt, dass sich bei geöffnetem Ventil 170, 172 vor der Engstelle des zugehörigen Ventildichtsitzes ein Staudruck bildet, der dem gewünschten Bremsdruck an der zugeordneten Radbremse RB1, RB4 entspricht. Es wird damit unter Beibehaltung des Bremsdrucks an der entsprechenden Radbremse RB1 oder RB4 genauso viel Hydraulikfluidvolumen aus dem Hauptzylinder 110 gefördert, wie über das entsprechende geöffnete Ventil 170, 172 in das drucklose Reservoir 120 abfließen kann. Auf diese Weise kann während der Leerweg-Freischaltung der Bremsdruck an der entsprechenden Radbremse RB1 oder RB4 nicht nur gehalten, sondern auch geändert (erhöht oder verringert) werden.

Damit an den Ventilen 170, 172 ein ausreichender Staudruck aufgebaut werden kann, ist es vorteilhaft, wenn die Ventile 170, 172 jeweils einen vergleichsweise geringen Querschnitt von unter 10mm², vorzugsweise von unter 5mm² (z.B. von ungefähr 2 mm²) aufweisen. Gleichzeitig sollten die den Ventilen 170, 172 in Strömungsrichtung des Hydraulikfluids jeweils vorgeschalteten Ventile 152, 158 einen entsprechend größeren Querschnitt von mehr als 10 mm² (z. B. von ungefähr 14 mm²) und damit eine geringere Drosselwirkung aufweisen.

Ein möglicher Ausfall eines der Ventile 170, 172 hat vorteilhafterweise nicht den Ausfall des gesamten, dem Ventil 170, 172 zugeordneten Bremskreises I. oder II. zur Folge. Lediglich die dem undichten Ventil 170, 172 zugeordnete Radbremse RB1, RB 4 (also eine einzige der Radbremsen RB) kann in diesem Fall nicht mehr mit Hydraulikdruck beaufschlagt werden.

Wie bereits erläutert, kann die oben geschilderte Leerweg-Freischaltung auch im Rahmen eines regenerativen Bremsbetriebs (Generatorbetrieb) erfolgen.

Auch hier wird das bei einer Förderbewegung im Hauptzylinder 110 aus den Hydraulikkammern 116,118 verdrängte Hydraulikfluid dann nicht zu den Radbremsen RB geleitet, sondern zum drucklosen Hydraulikfluidreservoir 120, ohne dass es zu einem (im regenerativen Bremsbetrieb in der Regel unerwünschten) Hydraulikdruckaufbau an den Radbremsen RB käme. Eine Bremswirkung wird im regenerativen Bremsbetrieb durch den Generator (vgl. Bezugszeichen 102 in Fig. 1) erzielt. Der regenerative Bremsbetrieb kann achsweise implementiert sein.

Schließlich verbessert ein Öffnen eines der Ventilpaare 152, 170 und 158, 172 auch das Nachfüllen der Hydraulikkammern 116, 118 mit Hydraulikfluid aus dem drucklosen Reservoir 120. Ein solches Nachfüllen kann während eines laufenden Fahrdymanikregeleingriffs oder allgemein während eines Betriebsbremsvorgangs erforderlich werden (z.B. aufgrund von so genanntem Bremsen-"Fading"). Bei einem Rückhub der im Hauptzylinder 110 vorgesehen Kolbenanordnung 112, 114 (in Fig. 2 nach rechts) wird dann Hydraulikfluid aus dem drucklosen Reservoir 120 über eines oder beide der (geöffneten) Ventilpaare 152, 170 und 158, 172 in die Kammern 116, 118 angesaugt. Dies ist in Fig. 2 für das Ventilpaar 152, 170 durch die Sequenz aus gestricheltem und gepunktetem Pfeil (bei Umkehr der Pfeilrichtungen) angedeutet.

Es ist darauf hinzuweisen, dass das Nachfüllen auch bei geschlossenen Ventilpaaren 152, 170 und 158, 172 stets über die in Fig. 2 erkennbaren direkten Verbindungen der Kammern 116, 118 mit dem drucklosen Reservoir 120 erfolgen kann. Durch Öffnen wenigstens eines der beiden Ventilpaare 152, 170 und 158, 172 wird jedoch ein paralleler Hydraulikpfad geöffnet, um den für das Nachfüllen effektiv vorhandenen Leitungsquerschnitt zu erhöhen (also um das Nachfüllen zu beschleunigen). Es wären auch Ausführungsbeispiele denkbar, in denen das Nachfüllen ausschließlich über eines oder beide der Ventilpaare 152, 170 und 158, 172 erfolgt.

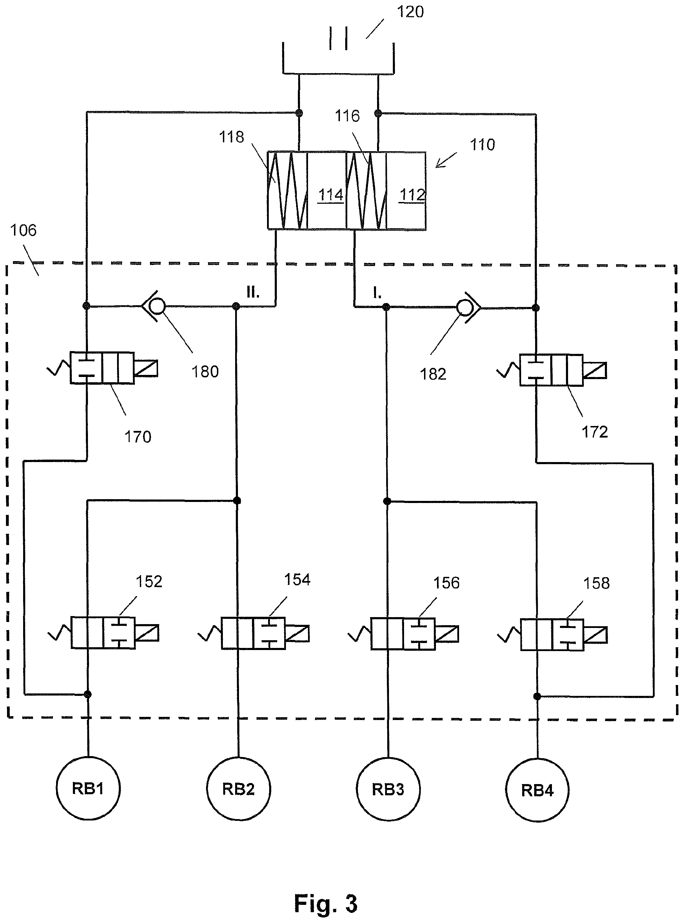

Das vorstehend erläuterte Nachfüllen der Hydraulikkammern 116, 118 bedingt, dass wenigstens eine der Radbremsen RB1 und RB4 drucklos wird, da das zugeordnete Ventilpaar 152, 170 oder 158, 172 geöffnet werden muss. Dies kann in bestimmten Situationen unerwünscht sein. Daher wird bei der Ausführungform der HCU 106 gemäß Fig. 3 vorgeschlagen, in den Hydraulikpfad zwischen dem Hauptzylinder 110 und dem drucklosen Reservoir 120 zwei Rückschlagventile 180, 182 vorzusehen. Genauer gesagt ist jedem der Bremskreise I. und II. genau eines der beiden Rückschlagventile 180, 182 zugeordnet. Um ein Ansaugen von Hydraulikfluid zu ermöglichen, sind die Durchlassrichtungen der Rückschlagventile 180, 182 vom drucklosen Reservoir 120 zum Hauptzylinder 110 hin vorgesehen. Aufgrund der gewünschten Leckage-Freiheit der Rückschlagventile 180, 182, können diese eine Gummidichtsitz besitzen.

Für den Nachfüllvorgang ist die ECU 150 dazu ausgebildet, durch Betätigen des elektromechanischen Aktuators 124 Hydraulikfluid aus dem drucklosen Reservoir 120 über die Rückschlagventile 180, 182 in die entsprechenden Hauptzylinder-Kammern 112, 114 anzusaugen. Das Ansaugen wird von der ECU 150 eingeleitet, wenn alle Räder des Fahrzeugs nahezu optimal bremsen. Es kann damit vermieden werden, dass ein Nachsaugen beispielsweise dann stattfindet, wenn an einer Radbremse RB eines Vorderrads gerade ein Hydraulikdruckabbau durchgeführt wurde und dieses nun auf einen Hydraulikdruckwiederaufbau wartet. Das Nachfüllen des Hauptzylinder 110 würde diesen Hydraulikdruckwiederaufbau verzögern und zu einem nicht akzeptablen zeitlichen Bremskraftverlust durch den zu späten (und dann vergleichsweise großen) Druckaufbau führen.

Das Nachfüllen des Hauptzylinders 110 kann zeitgleich mit dem Ablassen von Hydraulikfluid aus einer oder beiden der Radbremsen RB 1 und RB4 über eines oder beide der Ventile 170, 172 erfolgen. Zweckmäßigerweise besitzen die Rückschlagventile 180,182 einen vergleichsweise großen Öffnungsquerschnitt, damit das Nachfüllen des Hauptzylinder 110 zügig durchgeführt werden kann. So kann der jeweilige Öffnungsquerschnitt 10 mm² oder mehr (z.B. ungefähr 15 mm²) betragen.

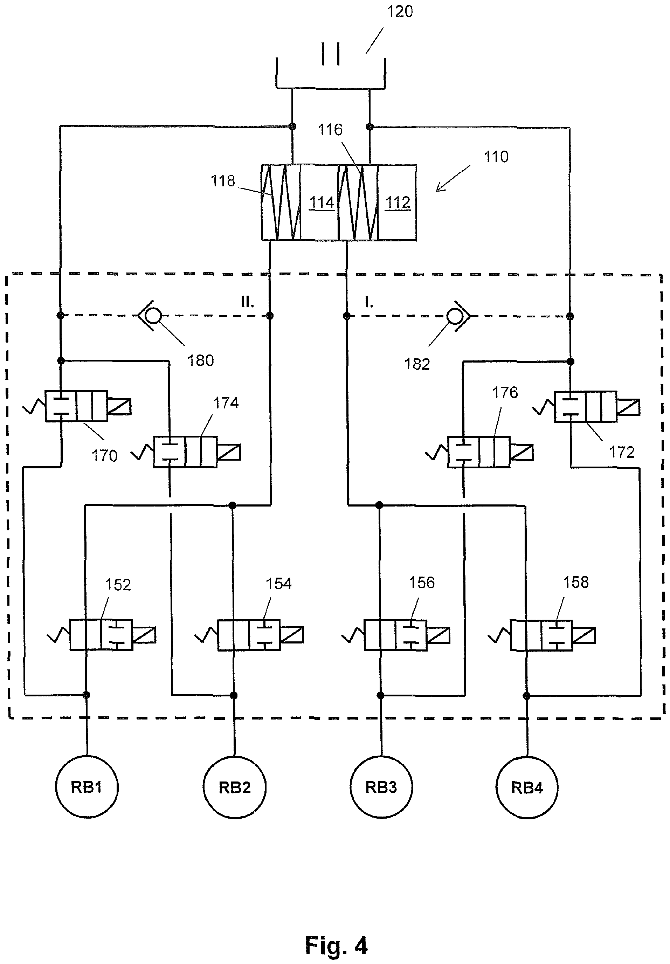

In Fig. 4 ist ein weiteres Ausführungsbeispiel der HCU 106 dargestellt. Abweichend von den in den Fign. 2 und 3 dargestellten Ausführungsbeispielen sind nun zwei zusätzliche Ventile 174, 176 vorgesehen, welche parallel zu den Ventilen 154, 156 angeordnet sind. Die zusätzlichen Ventile 174, 176 gleichen in Aufbau und Funktion den Ventilen 170, 172. Somit ist bei dem Ausführungsbeispiel gemäß Fig. 4 beispielsweise eine Leerweg-Freischaltung über die Radbremsen RB sowohl der Vorderachse als auch der Hinterachse möglich.

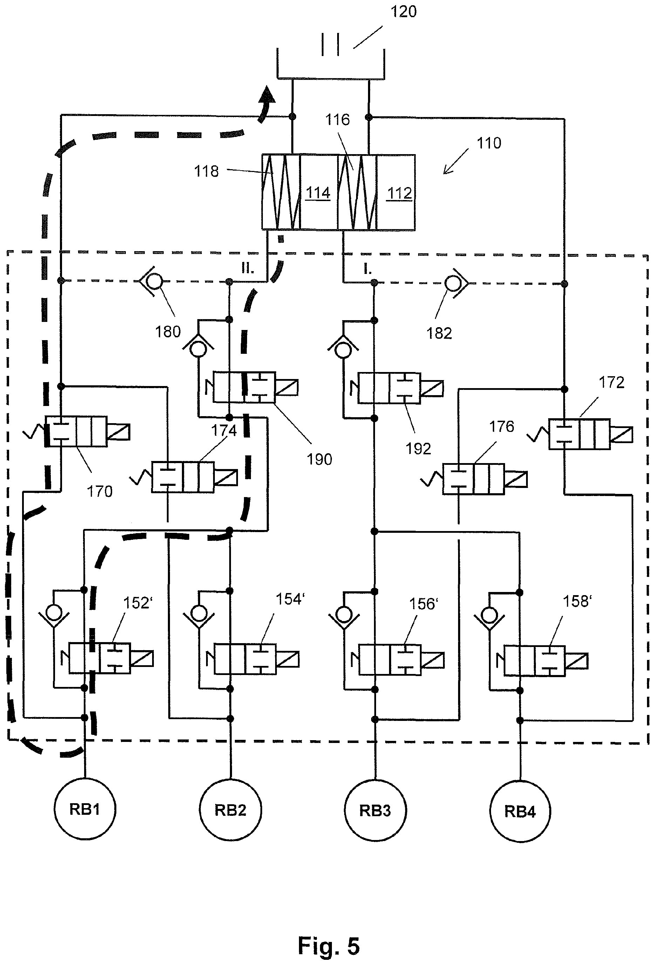

Das in Fig. 5 dargestellte dritte Ausführungsbeispiel der HCU 106 gleicht in Bezug auf die Ventile 170, 172, 174, 176 dem Ausführungsbeispiel gemäß Fig. 4, jedoch sind für die Radbremsen RB Ventilanordnungen 152', 154', 156', 158' mit jeweils einem 2/2-Wege-Ventil und einem dazu parallel geschalteten Rückschlagventil vorgesehen. Die parallel geschalteten Rückschlagventile ermöglichen einen Bremsdruckabbau in manchen ABS-Situationen.

Ferner ist pro Bremskreis I. und II. zum Hauptzylinder 110 hin je eine weitere Ventilanordnung 190, 192 aus einem 2/2-Wege-Ventil mit parallel geschaltetem Rückschlagventil vorgesehen. Das jeweilige Rückschlagventil ermöglicht eine Bremsdruckerhöhung an den zugeordneten Radbremsen (über den elektromechanischen Aktuator 124 oder im Push-Through-Betrieb) selbst in der geschlossenen Stellung der entsprechenden Ventilanordnung 190, 192.

Die weiteren Ventilanordnungen 190, 192 werden in die geschlossenen Stellung gebracht, wenn in den Hauptzylinder 110 Hydraulikfluid aus dem drucklosen Reservoir 120 nachgesaugt werden muss (z.B. während eines Fahrdynamikregelbetriebs). Wie bereits erläutert kann das Hydraulikfluid dabei dem Reservoir 120 sowohl direkt entnommen werden als auch über die (optionalen) parallelen Hydraulikpfade, in denen die Rückschlagventile 180, 182 angeordnet sind.

Wären die Ventilanordnungen 190, 192 nicht vorhanden oder nicht geschlossen, würde beim Nachfüllen das Hydraulikfluid (selbst bei geschlossenen Ventilanordnungen 152', 154', 156', 158') aus den Radbremsen angesaugt werden. In einem solchen Fall würde das Nachfüllen beispielsweise mit Druckhaltephasen an den Radbremsen kollidieren. Dies hängt mit den Durchlassrichtungen der zu den (geschlossenen) Ventilanordnungen 152', 154', 156', 158' parallel geschalteten Rückschlagventile zusammen.

Die Ventilanordnungen 152', 154', 156', 158' können gemäß einer ersten Variante, wie oben für die Ventilanordnungen 152, 154, 156, 158 beschrieben, sowohl für einen Hydraulikdruckaufbau als auch einen Hydraulikdruckabbau -jedenfalls in manchen Fällen oder Betriebsarten - geöffnet werden. In dieser ersten Variante können die Ventilanordnungen 152', 154', 156', 158' dabei in einem zeitlichen Multiplex-Betrieb angesteuert werden. Gemäß einer zweiten Variante werden die Ventilanordnungen 152', 154', 156', 158' auf herkömmliche Art und Weise betrieben, so dass diese nur zum Drauckaufbau geöffnet werden. Der Druckabbau findet dann stets über die Ventilanordnungen 170, 172, 174, 176 statt. Insbesondere gemäß der zweiten Variante können herkömmliche Ventilanordnungen und herkömmliche Ansteuermechanismen, wie sie bereits seit Langem in Serie verbaut werden, zum Einsatz gelangen.

Wie in Fig. 5 durch einen gestrichelten Pfeil beispielhaft für die Sequenz der Ventilanordnungen 190, 152', 170 hervorgehoben, findet der oben bereits beschriebene hydraulische Kurzschluss zwischen Hauptzylinder 110 und drucklosem Reservoir 120 (z.B. zum Einstellen eines unterhalb eines Blockierbremsdruckwerts liegenden Hydraulikdrucks an einer der Radbremsen oder zur Leerweg-Freischaltung) über alle diese drei Ventilanordnungen 190, 152', 170 statt. Die Ventilanordnungen 190, 152', 170 werden hierzu geöffnet. Selbstverständlich kann der hydrualische Kurzschluss auch über eine alternative oder zusätzliche Sequenz von Ventilanordnungen (z.B. 192, 188', 172) stattfinden.

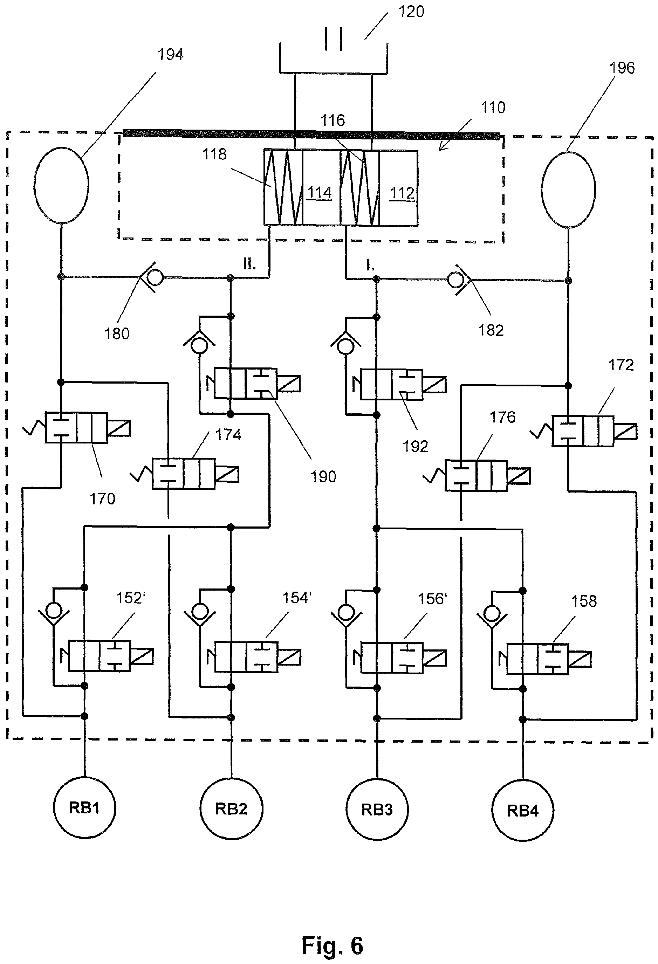

Fig. 6 zeigt schließlich eine Abwandlung der HCU 106 gemäß dem Ausführungsbeispiel von Fig. 5. Im Ausführungsbeispiel gemäß Fig. 6 münden die Ventile 170, 172, 174, 176 (sowie die nun nicht mehr optionalen Rückschlagventile 180,182) nicht in das drucklose Reservoir 120, sondern in einen für jeden der beiden Bremskreise I. und II. getrennt vorgesehenen Druckspeicher 194, 196. Die Druckspeicher 194, 196 dienen sowohl der Aufnahme von aus den Radbremsen RB abgelassenem Hydraulikfluid als auch der Versorgung des Hauptzylinder 110 mit Hydraulikfluid, falls ein Nachfüllen erforderlich wird. Das Nachfüllen aus den Druckspeichern 194, 196 erfolgt hierbei über die Rückschlagventile 180, 182. Parallel hierzu kann der Hauptzylinder aus dem drucklosen Reservoir 120 nachgefüllt werden.

Die Hydraulikdruckspeicher 194, 196 können jeweils als LPA ausgelegt sein. Es ist darauf hinzuweisen, dass auch bei den HCUs 106 gemäß den Fign. 2 bis 5 derartige Druckspeicher anstelle der Verbindung zum drucklosen Reservoir 120 vorgesehen sein können

Die in den Fign. 3 bis 6 veranschaulichten Rückschlagventile 180, 182 können auch unabhängig von den dort jeweils gezeigten Ventil-Beschaltungen und den dort jeweils erörterten Ventil-Ansteuerungen allgemein bei einer Fahrzeug-Bremsanlage, inbesondere mit dem jeweils dargestellten elektromechanischen Aktuator 124 oder einem anderweitig angeordneten elektromechanischen Aktuator (vgl. z.B. WO 2011/141158 A2), implementiert werden. So wäre es denkbar, wenigstens eines der beiden Rückschlagventile 180, 182 bei den in den Fign. 5 und 6 gezeigten Bremsanlagen mit je einer 12-Ventil-Beschaltung beizubehalten und die dort gezeigten Ventilanordnungen in herkömmlicher Weise (also in keinem zeitlichen Multiplex-Betrieb) anzusteuern.

Es ist darauf hinzuweisen, dass in den obigen Ausführungsbeispielen der elektromechanische Aktuator 124 unmittelbar auf die Hydraulikkolbenanordnung 112, 114 im Hauptyzlinder 110 einwirkt. In anderen Ausführungsbeispielen kann der elektromechanische Aktuator 124 zur Hydraulikdruckeinstellung an den Radbremsen auf einen Kolben einwirken, der in einem vom Hauptzylinder 110 verschiedenen Zylinder angeordnet ist. Dieser Zylinder kann (von den Radbremsen aus betrachtet) parallel zum Hauptzylinder 110 angeordnet sein. Eine solche Anordnung ist beispielsweise aus der WO 2011/141158 A2 bekannt. Gemäß einer beispielhaften Anordnung wird der Hauptzylinder 110 zur Hydraulikdruckerzeugung im "Push-Through"-Modus mechnisch oder hydraulisch-mechanisch vom Fahrer betätigt. Im regulären "Brake-by-Wire"-Modus erfolgt die Hydraulikdruckeinstellung (z.B. zum Erhöhen, Halten oder Reduzieren des Drucks) hingegen über den elektromechanischen Aktuator 124, der hierzu auf den zusätzlichen zum Hauptzylinder vorgesehenen Zylinder einwirkt.

## Patentansprüche

1. Elektrohydraulische Fahrzeug-Bremsanlage (100), umfassend
einen elektromechanischen Aktuator (124) zur Betätigung wenigstens eines Hydraulikkolbens (112; 114), um an einer oder mehreren einer Mehrzahl von Radbremsen einen Hydraulikdruck einzustellen;
einen Satz elektrisch ansteuerbarer Ventilanordnungen (152, 154, 156, 158, 170, 172, 174, 176) mit
je einer ersten Ventilanordnung (152, 154, 156, 158) zwischen einem den wenigstens einen Hydraulikkolben (112; 114) aufnehmenden Zylinder (110) und jeder der Mehrzahl von Radbremsen sowie
wenigstens einer zweiten Ventilanordnung (170, 172, 174, 176) zwischen einer Aufnahme-Einrichtung (120, 194, 196) für Hydraulikfluid und wenigstens einer der Radbremsen, wobei die wenigstens eine zweite Ventilanordnung (170, 172, 174, 176) parallel zu derjenigen der ersten Ventilanordnungen (152, 154, 156, 158) vorgesehen ist, die derselben Radbremse wie die wenigstens eine zweite Ventilanordnung (170, 172, 174, 176) zugeordnet ist; **gekennzeichnet durch**
ein Steuergerät oder Steuergerätesystem (150), das ausgebildet ist zum Ansteuern der ersten Ventilanordnungen (152, 154, 156, 158) und des elektromechanischen Aktuators (124), um an wenigstens einer der Radbremsen und über die dieser Radbremse zugeordnete, geöffnete erste Ventilanordnung (152, 154, 156, 158) einen Hydraulikdruck aufzubauen sowie über die geöffnete erste Ventilanordnung (152, 154, 156, 158) einen aufgebauten Hydraulikdruck abzubauen.

2. Bremsanlage nach Anspruch 1, wobei
das Steuergerät oder Steuergerätesystem (150) ausgebildet ist, um den an einer Radbremse aufgebauten Hydraulikdruck wahlweise durch Öffnen der zugeordneten ersten Ventilanordnung (152, 154, 156, 158) oder durch Öffnen der zugeordneten zweiten Ventilanordnung (170, 172, 174, 176) abzubauen,
wobei
das Steuergerät oder Steuergerätesystem (150) insbesondere ausgebildet ist, um den Hydraulikdruck an der Radbremse über die geöffnete zweite Ventilanordnung (170, 172, 174, 176) abzubauen, wenn an wenigstens einer weiteren der Radbremsen über die dieser weiteren Radbremse zugeordnete geöffnete erste Ventilanordnung (152, 154, 156, 158) und mittels des elektromechanischen Aktuators (124) ein Hydraulikdruckabbau mit unzureichender Geschwindigkeit oder ein Hydraulikdruckaufbau erfolgt.

3. Bremsanlage nach einem der vorhergehenden Ansprüche, wobei
das Steuergerät oder Steuergerätesystem (150) ausgebildet ist, um die ersten Ventilanordnungen (152, 154, 156, 158) in einem Zeitmultiplexbetrieb zu betätigen, wobei jeder der ersten Ventilanordnungen (152, 154, 156, 158) und damit jeder Radbremse wenigstens ein Zeitschlitz zugeordnet ist.

4. Bremsanlage nach Anspruch 3 in Kombination mit Anspruch 2, wobei
das Steuergerät oder Steuergerätesystem (150) ausgebildet ist, um den Hydraulikdruck an der Radbremse über die geöffnete zweite Ventilanordnung (170, 172, 174, 176) während eines Zeitschlitzes abzubauen, der einer anderen Radbremse zugeordnet ist.

5. Bremsanlage nach einem der vorhergehenden Ansprüche, wobei
die wenigstens eine zweite Ventilanordnung (170, 172, 174, 176) und diejenige der ersten Ventilanordnungen (152, 154, 156, 158), die derselben Radbremse wie die zweite Ventilanordnung (170, 172, 174, 176) zugeordnet ist, seriell in einem Hydraulikpfad zwischen dem Zylinder (110) und der Aufnahme-Einrichtung (120,194,196) angeordnet sind, und wobei das Steuergerät oder Steuergerätesystem (150) ausgebildet ist, um die zweite Ventilanordnung (170, 172, 174, 176) und die derselben Radbremse zugeordneten erste Ventilanordnung (152,154,156, 158) zu öffnen, um den Zylinder (110) fluidisch mit der Aufnahme-Einrichtung (120, 194, 196) zu koppeln,
wobei
das Steuergerät oder Steuergerätesystem (150) insbesondere ausgebildet ist, um bei mit dem Zylinder (110) fluidisch gekoppelter Aufnahme-Einrichtung (120, 194, 196) den elektromechanischen Aktuator (124) zu betätigen, um Hydraulikfluid aus dem Zylinder (110) in die Aufnahme-Einrichtung (120, 194, 196) abzulassen, oder
wobei
das Steuergerät oder Steuergerätesystem (150) insbesondere ausgebildet ist, um bei mit dem Zylinder (110) fluidisch gekoppelter Aufnahme-Einrichtung (120, 194, 196) den elektromechanischen Aktuator (124) zu betätigen, um Hydraulikfluid aus der Aufnahme-Einrichtung (120, 194, 196) in den Zylinder (110) anzusaugen.

6. Bremsanlage nach einem der vorhergehenden Ansprüche, die
wenigstens ein Rückschlagventil (180,182) umfasst, das in einem Hydraulikpfad zwischen dem Zylinder (110) und der Aufnahme-Einrichtung (120, 194, 196) vorgesehen ist und dessen Durchlassrichtung zum Zylinder (110) zeigt,
wobei
das Steuergerät oder Steuergerätesystem (150) insbesondere ausgebildet ist, um durch Betätigen des elektromechanischen Aktuators (124) Hydraulikfluid aus der Aufnahme-Einrichtung (120, 194, 196) über das Rückschlagventil (180, 182) in den Zylinder (110) anzusaugen,
wobei
das Rückschlagventil (180, 182) insbesondere derart im Hydraulikpfad zwischen dem Zylinder (110) und der Aufnahme-Einrichtung (120, 194, 196) vorgesehen ist, dass das Ansaugen auch dann erfolgen kann, wenn eine, mehrere oder alle der ersten Ventilanordnungen (152, 154, 156, 158) und/oder die wenigstens eine zweite Ventilanordnung (170, 172, 174, 176) geschlossen ist.

7. Bremsanlage nach Anspruch 6, wobei
das Rückschlagventil (180, 182) einen Öffnungsquerschnitt von mehr als 10 mm² und/oder einen Gummidichtsitz aufweist.

8. Bremsanlage nach einem der Ansprüche 6 und 7, wobei
der Zylinder (110) zwei Kammern umfasst, die jeweils mit der Aufnahme-Einrichtung (120, 194, 196) verbunden sind, wobei jeder Kammer ein separates Rückschlagventil (180, 182) zugeordnet ist.

9. Bremsanlage nach einem der Ansprüche 5 bis 8, wobei
der den wenigstens einen Hydraulikkolben (112; 114) aufnehmende Zylinder der Hauptzylinder (110) oder ein zum Hauptzylinder (110) parallel geschalteter Zylinder ist.

10. Bremsanlage nach einem der vorhergehenden Ansprüche, ferner umfassend
die Aufnahme-Einrichtung (120, 194, 196),
wobei
die Aufnahme-Einrichtung insbesondere als Druckspeicher (194, 196) ausgebildet ist oder
wobei
die Aufnahme-Einrichtung insbesondere als druckloses Hydraulikfluid-Reservoir (120) ausgebildet ist.

11. Bremsanlage nach einem der vorhergehenden Ansprüche, wobei
der elektromechanische Aktuator (124) einen Elektromotor (134) und ein mit dem Elektromotor (134) gekoppeltes Getriebe (136, 138) umfasst, wobei das Getriebe (136, 138) mit einem auf den wenigstens einen Hydraulikkolben (112; 114) einwirkenden Betätigungsglied (128) gekoppelt ist.

12. Bremsanlage nach einem der vorhergehenden Ansprüche, wobei
der elektromechanische Aktuator (124) zur Hydraulikdruckerzeugung in einem "Brake-By-Wire"-Modus der Bremsanlage (100) ansteuerbar ist, und/oder
ferner umfassend
einen Aktuator (126) zur Hydraulikdruckerzeugung in einem "Push-Through"-Modus der Bremsanlage (100).

13. Bremsanlage nach einem der vorhergehenden Ansprüche, wobei
die ersten Ventilanordnungen (152, 154, 156, 158) jeweils genau ein
erstes Ventil umfassen,
wobei das erste Ventil bei fehlender elektrischer Ansteuerung insbesondere geöffnet ist.

14. Bremsanlage nach einem der vorhergehenden Ansprüche, wobei die wenigstens eine zweite Ventilanordnung (170, 172, 174, 176) genau ein Ventil umfasst,
wobei
das zweite Ventil bei fehlender elektrischer Ansteuerung insbesondere geschlossen ist.

15. Bremsanlage nach einem der vorhergehenden Ansprüche, wobei
eine Drosselwirkung der wenigstens einen zweiten Ventilanordnung (170, 172, 174, 176) im geöffneten Zustand höher ist als eine Drosselwirkung der derselben Radbremse zugeordneten ersten Ventileinrichtung (152, 154, 156, 158) im geöffneten Zustand.

16. Bremsanlage nach einem der vorhergehenden Ansprüche, wobei
jeder Radbremse eine zweite Ventilanordnung (170, 172, 174, 176) zugeordnet ist, oder
wobei
die Bremsanlage zwei Bremskreise mit jeweils mindestens zwei Radbremsen umfasst, wobei jedem Bremskreis genau eine zweite Ventilanordnung (170, 172) zugeordnet ist.

17. Bremsanlage nach einem der vorhergehenden Ansprüche, wobei
das Steuergerät oder Steuergerätesystem (150) ausgebildet ist, um die ersten Ventilanordnungen (152, 154, 156, 158) während eines fahrerunabhängigen Bremseingriffs anzusteuern.

18. Verfahren für das Betreiben einer elektrohydraulischen Fahrzeug-Bremsanlage (100), die einen elektromechanischen Aktuator (124) zur Betätigung wenigstens eines Hydraulikkolbens (112; 114), um an einer oder mehreren einer Mehrzahl von Radbremsen einen Hydraulikdruck einzustellen, und einen Satz elektrisch ansteuerbarer Ventilanordnungen (152, 154, 156, 158, 170, 172, 174, 176) umfasst, wobei der Satz Ventilanordnungen (152, 154, 156, 158) je eine erste Ventilanordnung zwischen einem den wenigstens einen Hydraulikkolben (112; 114) aufnehmenden Zylinder (110) und jeder der Mehrzahl von Radbremsen sowie wenigstens eine zweite Ventilanordnung (170, 172, 174, 176) zwischen einer Aufnahme-Einrichtung (120, 194, 196) für Hydraulikfluid und wenigstens einer der Radbremsen umfasst, wobei die wenigstens eine zweite Ventilanordnung (170, 172, 174, 176) parallel zu derjenigen der ersten Ventilanordnungen (152, 154, 156, 158) vorgesehen ist, die derselben Radbremse wie die wenigstens eine zweite Ventilanordnung (170, 172, 174, 176) zugeordnet ist, **gekennzeichnet durch** den Schritt:
Ansteuern der ersten Ventilanordnungen (152, 154, 156, 158) und des elektromechanischen Aktuators (124), um an wenigstens einer der Radbremsen und über die dieser Radbremse zugeordnete, geöffnete erste Ventilanordnung (152, 154, 156, 158) einen Hydraulikdruck aufzubauen sowie über die geöffnete erste Ventilanordnung (152, 154, 156, 158) einen aufgebauten Hydraulikdruck abzubauen.

19. Computerprogrammprodukt mit Programmcodemitteln zum Durchführen des Verfahrens nach Anspruch 18, wenn das Computerprogrammprodukt auf wenigstens einem Prozessor abläuft.

20. Fahrzeug-Steuergerät oder -Steuergerätesystem (150), umfassend das Computerprogrammprodukt nach Anspruch 19.

## Claims

1. An electrohydraulic vehicle brake system (100), comprising
an electromechanical actuator (124) for actuating at least one hydraulic piston (112; 114) in order to set a hydraulic pressure at one or more of a plurality of wheel brakes;
a set of electrically activatable valve arrangements (152, 154, 156, 158, 170, 172, 174, 176) having
a respective first valve arrangement (152, 154, 156, 158) between a cylinder (110) accommodating the at least one hydraulic piston (112; 114) and each of the plurality of wheel brakes, and
at least one second valve arrangement (170, 172, 174, 176) between a receptacle device (120, 194, 196) for hydraulic fluid and at least one of the wheel brakes, wherein the at least one second valve arrangement (170, 172, 174, 176) is provided in parallel with that one of the first valve arrangements (152, 154, 156, 158) which is associated with the same wheel brake as the at least one second valve arrangement (170, 172, 174, 176); **characterized by**
a control device or control device system (150) configured to activate the first valve arrangements (152, 154, 156, 158) and the electromechanical actuator (124), in order to build up a hydraulic pressure at at least one of the wheel brakes and via the opened first valve arrangement (152, 154, 156, 158) associated with that wheel brake and to reduce a built-up hydraulic pressure via the opened first valve arrangement (152, 154, 156, 158).

2. The brake system according to Claim 1, wherein
the control device or control device system (150) is configured to reduce the hydraulic pressure built up at a wheel brake, selectively by opening the associated first valve arrangement (152, 154, 156, 158) or by opening the associated second valve arrangement (170, 172, 174, 176), wherein the control device or control device system (150) is in particular configured to reduce the hydraulic pressure at the wheel brake via the opened second valve arrangement (170, 172, 174, 176) when, at at least one other of the wheel brakes, via the opened first valve arrangement (152, 154,156,158) associated with this other wheel brake and by means of the electromechanical actuator (124), a hydraulic pressure reduction takes place with insufficient speed or a hydraulic pressure build-up takes place.

3. The brake system according to one of the preceding claims, wherein
the control device or control device system (150) is configured to actuate the first valve arrangements (152, 154, 156, 158) in a time multiplex operation, wherein at least one time slot is associated with each of the first valve arrangements (152, 154, 156, 158) and thus with each wheel brake.

4. The brake system according to Claim 3 in combination with Claim 2, wherein
the control device or control device system (150) is configured to reduce the hydraulic pressure at the wheel brake via the opened second valve arrangement (170, 172, 174, 176) during a time slot associated with another wheel brake.

5. The brake system according to one of the preceding claims, wherein
the at least one second valve arrangement (170, 172, 174, 176) and that one of the first valve arrangements (152, 154, 156, 158) which is associated with the same wheel brake as the second valve arrangement (170, 172, 174, 176) are arranged serially in a hydraulic path between the cylinder (110) and the receptacle device (120, 194, 196), and wherein the control device or control device system (150) is configured to open the second valve arrangement (170, 172, 174, 176) and the first valve arrangement (152, 154, 156, 158) associated with the same wheel brake, in order to fluidically couple the cylinder (110) to the receptacle device (120, 194, 196), wherein the control device or control device system (150) is in particular configured to actuate the electromechanical actuator (124) when the receptacle device (120, 194, 196) is fluidically coupled to the cylinder (110), in order to release hydraulic fluid from the cylinder (110) into the receptacle device (120, 194, 196), or wherein the control device or control device system (150) is in particular configured to actuate the electromechanical actuator (124) when the receptacle device (120, 194, 196) is fluidically coupled to the cylinder (110), in order to suck hydraulic fluid from the receptacle device (120, 194, 196) into the cylinder (110).

6. The brake system according to one of the preceding claims, which
comprises at least one nonreturn valve (180, 182) which is provided in a hydraulic path between the cylinder (110) and the receptacle device (120, 194, 196) and the let-through direction of which is directed towards the cylinder (110), wherein the control device or control device system (150) is in particular configured to suck hydraulic fluid from the receptacle device (120, 194, 196) via the nonreturn valve (180, 182) into the cylinder (110) by actuating the electromechanical actuator (124), wherein the nonreturn valve (180, 182) is in particular provided in the hydraulic path between the cylinder (110) and the receptacle device (120, 194, 196) in such a manner that the sucking-in can also take place when one, a plurality of or all of the first valve arrangements (152, 154, 156, 168) and/or the at least one second valve arrangement (170, 172, 174, 176) is closed.

7. The brake system according to one of Claim 6, wherein the nonreturn valve (180, 182) has an opening cross-section of more than 10 mm² and/or a rubber sealing seat.

8. The brake system according to one of Claims 6 and 7, wherein the cylinder (110) comprises two chambers which are respectively connected to the receptacle device (120, 194, 196), wherein a separate nonreturn valve (180, 182) is associated with each chamber.

9. The brake system according to one of Claims 5 to 8, wherein the cylinder accommodating the at least one hydraulic piston (112; 114) is the master cylinder (110) or a cylinder connected in parallel with the master cylinder (110).

10. The brake system according to one of the preceding claims, further comprising the receptacle device (120, 194, 196), wherein
the receptacle device is in particular configured as a pressure accumulator (194, 196) or wherein
the receptacle device is in particular configured as an unpressurised hydraulic fluid reservoir (120).

11. The brake system according to one of the preceding claims, wherein
the electromechanical actuator (124) comprises an electric motor (136) and a transmission (136, 138) coupled to the electric motor (134), wherein the transmission (136, 138) is coupled to an actuating member (128) acting on the at least one hydraulic piston (112; 114).

12. The brake system according to one of the preceding claims, wherein
the electromechanical actuator (124) is activatable for hydraulic pressure generation in a "brake-by-wire" mode of the brake system (100), and/or further comprising an actuator (126) for hydraulic pressure generation in a "push-through" mode of the brake system (100).

13. The brake system according to one of the preceding claims, wherein
the first valve arrangements (152, 154, 156, 158) comprise respectively exactly one first valve, wherein the first valve is especially opened in the absence of electrical activation.

14. The brake system according to one of the preceding claims, wherein
the at least one second valve arrangement (170, 172, 174, 176) comprises exactly one valve, wherein the second valve is in particular closed in the absence of electrical activation.

15. The brake system according to one of the preceding claims, wherein
a throttling effect of the at least one second valve arrangement (170, 172, 174, 176) in the opened state is higher than a throttling effect of the first valve device (152, 154, 156, 158), associated with the same wheel brake, in the opened state.

16. The brake system according to one of the preceding claims, wherein
a second valve arrangement (170, 172, 174, 176) is associated with each wheel brake, or wherein the brake system comprises two brake circuits having respectively at least two wheel brakes, wherein exactly one second valve arrangement (170, 172) is associated with each brake circuit.

17. The brake system according to one of the preceding claims, wherein
the control device or control device system (150) is configured to activate the first valve arrangements (152, 154, 156, 158) during a driver-independent braking intervention.

18. A method for operating an electrohydraulic vehicle brake system (110) which comprises an electromechanical actuator (124) for actuating at least one hydraulic piston (112; 114) in order to set a hydraulic pressure at one or more of a plurality of wheel brakes, and a set of electrically activatable valve arrangements (152, 154, 156, 158, 170, 172, 174, 176), wherein the set of valve arrangements (152, 154, 156, 158) comprises a respective first valve arrangement between a cylinder (110) accommodating the at least one hydraulic piston (112; 114) and each of the plurality of wheel brakes, and at least one second valve arrangement (178) between a receptacle device (120,194,196) for hydraulic fluid and at least one of the wheel brakes, wherein the at least one second valve arrangements (170, 172, 174, 176) is provided in parallel with that one of the first valve arrangements (152, 154, 156, 158) which is associated with the same wheel brake as the at least one second valve arrangement (170, 172, 174, 176), **characterized by** comprising the step:
activating the first valve arrangements (152, 154, 156, 158) and the electromechanical actuator (124), in order to build up a hydraulic pressure at at least one of the wheel brakes and via the opened first valve arrangement (152, 154, 156, 158) associated with that wheel brake and to reduce a built-up hydraulic pressure via the opened first valve arrangement (152, 154, 156, 158).

19. A computer program product having program code means for carrying out the method according to Claim 18 when the computer program product is executed on at least one processor.

20. A vehicle control device or vehicle control device system (150), comprising the computer program product according to Claim 19.

## Revendications

1. Système de freinage électrohydraulique de véhicule (100), comprenant
un actionneur électromécanique (124) destiné à actionner au moins un piston hydraulique (112 ; 114) afin d'établir une pression hydraulique sur un ou plusieurs d'une pluralité de freins de roue,
un jeu d'ensembles soupape à commande électrique (152, 154, 156, 158, 170, 172, 174, 176), comprenant
respectivement un premier ensemble soupape (152, 154, 156, 158) disposé entre un cylindre (110) logeant ledit au moins un piston hydraulique (112 ; 114) et chacun de la pluralité de freins de roue, et
au moins un deuxième ensemble soupape (170, 172, 174, 176) disposé entre un moyen de réception (120, 194, 196) de fluide hydraulique et au moins un des freins de roue, ledit au moins un deuxième ensemble soupape (170, 172, 174, 176) étant prévu parallèlement à celui des premiers ensembles soupape (152, 154, 156, 158) qui est associé au même frein de roue que ledit au moins un deuxième ensemble soupape (170, 172, 174, 176), **caractérisé par**
un calculateur ou un système de calculateurs (150) qui est conçu pour commander les premiers ensembles soupape (152, 154, 156, 158) et l'actionneur électromécanique (124) afin d'établir, sur au moins un des freins de roue, une pression hydraulique via le premier ensemble soupape (152, 154, 156, 158) ouvert associé à ce frein de roue et de dissiper une pression hydraulique établie via le premier ensemble soupape (152, 154, 156, 158) ouvert.

2. Système de freinage selon la revendication 1, dans lequel
le calculateur ou le système de calculateurs (150) est conçu pour dissiper la pression hydraulique établie sur un frein de roue au choix par ouverture du premier ensemble soupape (152, 154, 156, 158) associé ou par ouverture du deuxième ensemble soupape (170, 172, 174, 176) associé, le calculateur ou le système de calculateurs (150) étant en particulier conçu pour dissiper la pression hydraulique sur le frein de roue via le deuxième ensemble soupape (170, 172, 174, 176) ouvert lorsqu'une dissipation de pression hydraulique à vitesse insuffisante ou un établissement de pression hydraulique est effectué sur au moins un autre des freins de roue via le premier ensemble soupape (152, 154, 156, 158) ouvert associé à cet autre frein de roue et au moyen de l'actionneur électromécanique (124).

3. Système de freinage selon l'une des revendications précédentes, dans lequel
le calculateur ou le système de calculateurs (150) est conçu pour actionner les premiers ensembles soupape (152, 154, 156, 158) dans un mode de multiplexage temporel dans lequel au moins un intervalle de temps est associé à chacun des premiers ensembles soupape (152, 154, 156, 158) et donc à chaque frein de roue.

4. Système de freinage selon la revendication 3 en combinaison avec la revendication 2, dans lequel
le calculateur ou le système de calculateurs (150) est conçu pour dissiper la pression hydraulique sur le frein de roue via le deuxième ensemble soupape (170, 172, 174, 176) ouvert pendant un intervalle de temps qui est associé à un autre frein de roue.

5. Système de freinage selon l'une des revendications précédentes, dans lequel
ledit au moins un deuxième ensemble soupape (170, 172, 174, 176) et celui des premiers ensembles soupape (152, 154, 156, 158) qui est associé au même frein de roue que le deuxième ensemble soupape (170, 172, 174, 176) sont disposés en série dans un chemin hydraulique entre le cylindre (110) et le moyen de réception (120, 194, 196), et dans lequel le calculateur ou le système de calculateurs (150) est conçu pour ouvrir le deuxième ensemble soupape (170, 172, 174, 176) et le premier ensemble soupape (152, 154,1 56, 158) associé au même frein de roue pour coupler fluidiquement le cylindre (110) au moyen de réception (120, 194, 196), le calculateur ou le système de calculateurs (150) étant en particulier conçu pour, lorsque le moyen de réception (120, 194, 196) est couplé fluidiquement au cylindre (110), actionner l'actionneur électromécanique (124) afin d'évacuer du fluide hydraulique du cylindre (110) dans le moyen de réception (120, 194, 196), ou le calculateur ou le système de calculateurs (150) étant en particulier conçu pour, lorsque le moyen de réception (120, 194, 196) est couplé fluidiquement au cylindre (110), actionner l'actionneur électromécanique (124) afin d'aspirer du fluide hydraulique du moyen de réception (120, 194, 196) dans le cylindre (110).

6. Système de freinage selon l'une des revendications précédentes, lequel
comprend au moins un clapet antiretour (180,182) qui est prévu dans un chemin hydraulique entre le cylindre (110) et le moyen de réception (120, 194, 196) et dont le sens de passage est dirigé vers le cylindre (110), le calculateur ou le système de calculateurs (150) étant en particulier conçu pour, par actionnement de l'actionneur électromécanique (124), aspirer du fluide hydraulique du moyen de réception (120, 194, 196) dans le cylindre (110) via le clapet antiretour (180, 182), le clapet antiretour (180, 182) étant en particulier prévu dans le chemin hydraulique entre le cylindre (110) et le moyen de réception (120, 194, 196) de sorte que l'aspiration puisse aussi avoir lieu lorsqu'un, plusieurs ou tous les premiers ensembles soupape (152, 154, 156, 168) et/ou ledit au moins un deuxième ensemble soupape (170, 172, 174, 176) sont fermés.

7. Système de freinage selon la revendication 6, dans lequel
le clapet antiretour (180,182) présente une section transversale d'ouverture de plus de 10 mm² et/ou un siège d'étanchéité en caoutchouc.

8. Système de freinage selon l'une des revendications 6 et 7, dans lequel
le cylindre (110) comprend deux chambres qui sont reliées chacune au moyen de réception (120, 194, 196), un clapet antiretour (180, 182) séparé étant associé à chaque chambre.

9. Système de freinage selon l'une des revendications 5 à 8, dans lequel
le cylindre logeant ledit au moins un piston hydraulique (112 ; 114) est le maître-cylindre (110) ou un cylindre monté en parallèle avec le maître-cylindre (110).

10. Système de freinage selon l'une des revendications précédentes, comprenant en outre le moyen de réception (120, 194, 196), dans lequel
le moyen de réception est en particulier réalisé sous la forme d'un accumulateur hydraulique (194, 196), ou dans lequel
le moyen de réception est en particulier réalisé sous la forme d'un réservoir de fluide hydraulique sans pression (120).

11. Système de freinage selon l'une des revendications précédentes, dans lequel
l'actionneur électromécanique (124) comprend un moteur électrique (134) et un réducteur (136, 138) couplé au moteur électrique (134), le réducteur (136, 138) étant couplé à un organe d'actionnement (128) agissant sur ledit au moins un piston hydraulique (112 ; 114).

12. Système de freinage selon l'une des revendications précédentes, dans lequel
l'actionneur électromécanique (124) peut être commandé pour générer une pression hydraulique dans un mode « Brake-By-Wire » du système de freinage (100) et/ou le système de freinage comprenant en outre un actionneur (126) pour générer une pression hydraulique dans un mode « Push-Through » du système de freinage (100).

13. Système de freinage selon l'une des revendications précédentes, dans lequel
les premiers ensembles soupape (152, 154,156,158) comprennent chacun exactement une première soupape, la première soupape étant en particulier ouverte en l'absence de commande électrique.

14. Système de freinage selon l'une des revendications précédentes, dans lequel
ledit au moins un deuxième ensemble soupape (170, 172, 174, 176) comprend exactement une soupape, la deuxième soupape étant en particulier fermée en l'absence de commande électrique.

15. Système de freinage selon l'une des revendications précédentes, dans lequel
un effet d'étranglement dudit au moins un deuxième ensemble soupape (170, 172, 174, 176) à l'état ouvert est plus élevé qu'un effet d'étranglement du premier moyen formant soupape (152, 154, 156, 158) associé au même frein de roue à l'état ouvert.

16. Système de freinage selon l'une des revendications précédentes, dans lequel
un deuxième ensemble soupape (170, 172, 174, 176) est associé à chaque frein de roue, ou dans lequel le système de freinage comprend deux circuits de freinage de chaque fois au moins deux freins de roue, exactement un deuxième ensemble soupape (170, 172) étant associé à chaque circuit de freinage.

17. Système de freinage selon l'une des revendications précédentes, dans lequel
le calculateur ou le système de calculateurs (150) est conçu pour commander les premiers ensembles soupape (152, 154, 156, 158) pendant une intervention des freins indépendante du conducteur.

18. Procédé de fonctionnement d'un système de freinage électrohydraulique de véhicule (100) qui comprend un actionneur électromécanique (124) destiné à actionner au moins un piston hydraulique (112 ; 114) afin d'établir une pression hydraulique sur un ou plusieurs d'une pluralité de freins de roue, et un jeu d'ensembles soupape à commande électrique (152, 154, 156, 158, 170, 172, 174, 176), le jeu d'ensembles soupape à commande électrique (152, 154, 156, 158) comprenant respectivement un premier ensemble soupape disposé entre un cylindre (110) logeant ledit au moins un piston hydraulique (112 ; 114) et chacun de la pluralité de freins de roue ainsi qu'au moins un deuxième ensemble soupape (170, 172, 174, 176) disposé entre un moyen de réception (120, 194, 196) de fluide hydraulique et au moins un des freins de roue, ledit au moins un deuxième ensemble soupape (170, 172, 174, 176) étant prévu parallèlement à celui des premiers ensembles soupape (152, 154, 156, 158) qui est associé au même frein de roue que ledit au moins un deuxième ensemble soupape (170, 172, 174, 176),
**caractérisé par** l'étape consistant à :
commander les premiers ensembles soupape (152, 154, 156, 158) et l'actionneur électromécanique (124) afin d'établir, sur au moins un des freins de roue, une pression hydraulique via le premier ensemble soupape (152, 154, 156, 158) ouvert associé à ce frein de roue et de dissiper une pression hydraulique établie via le premier ensemble soupape (152, 154, 156, 158) ouvert.

19. Produit-programme informatique avec des moyens de code de programme pour mettre en oeuvre le procédé selon la revendication 18 lorsque le produit-programme informatique est exécuté sur au moins un processeur.

20. Calculateur ou système de calculateurs de véhicule (150), comprenant le produit-programme informatique selon la revendication 19.
